(19) Europäisches Patentamt
European Patent Office
Office européen des brevets

(11) EP 1 179 033 B1

(12) EUROPEAN PATENT SPECIFICATION

(45) Date of publication and mention of the grant of the patent:
**03.03.2004 Bulletin 2004/10**

(21) Application number: **00932245.4**

(22) Date of filing: **10.05.2000**

(51) Int Cl.[7]: **C09B 62/503**

(86) International application number:
**PCT/US2000/012750**

(87) International publication number:
**WO 2000/069974 (23.11.2000 Gazette 2000/47)**

(54) **REACTIVE DYE COMPOUNDS**

REAKTIVFARBSTOFFE

COMPOSES COLORANTS REACTIFS

(84) Designated Contracting States:
**AT BE CH CY DE DK ES FI FR GB GR IE IT LI LU MC NL PT SE**

(30) Priority: **19.05.1999 GB 9911690**
**01.10.1999 GB 9923331**

(43) Date of publication of application:
**13.02.2002 Bulletin 2002/07**

(73) Proprietor: **North Carolina State University**
**Raleigh, NC 27695-7003 (US)**

(72) Inventors:
- **LEWIS, David, Malcolm**
  **West Yorkshire LS21 2AL (GB)**
- **HE, Wei, Dong**
  **Leeds, Yorkshire LS27 0HF (GB)**
- **YOUSAF, Taher, Iqbal**
  **Surrey TW2O 9LQ (GB)**
- **GENAIN, Gilles, Yves, Marie, Fernand**
  **London W6 0YB (GB)**

(74) Representative:
**Reinhard - Skuhra - Weise & Partner**
**Friedrichstrasse 31**
**80801 München (DE)**

(56) References cited:
**FR-A- 1 274 732**
**GB-A- 949 316**
**US-A- 4 832 698**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 179 033 B1

## Description

The present invention relates to reactive dye compounds. In particular the present invention relates to reactive dye compounds having improved dye-bath Exhaustion (E) and improved dye-fibre covalent Fixation (F).

### Background of the Invention

Reactive dye compounds are known in the art for dyeing various substrates. Such substrates include for example proteinaceous materials such as keratin, e.g. found in hair, skin and nails and various animal body parts such as horns, hooves and feathers, and other naturally occurring protein containing materials, e.g. silk and saccharide-derived materials such as those derived from cellulose or cellulose derivatives, e.g. natural products such as cotton, and synthetic fibres such as polyamides.

Examples of classes of such reactive dyes which are well known in the art include dyes containing a vinyl sulphone group or vinyl sulphone precursor groups such as those commercially available from Dystar under the tradename Remazol.

There are many different types of commercially-available reactive dyes for dyeing cellulosic and polyamide-type substrates. However, a critical problem still facing the textile dye industry today is the significant level of dyestuff material which remains in the effluent waste water after the dyeing process is finished. The industry measure for this problem is known as dye-bath Exhaustion (E). A high Exhaustion value for a particular dye compound means that a low level of spent dye remains in the effluent after the dyeing process is complete, while a low Exhaustion value means that a high level of spent dye remains in the effluent. There is clearly a need therefore for new dye compounds which have higher Exhaustion Values compared with commercially available dye compounds, and which provide benefits in terms of reducing levels of spent dyestuff in effluent water.

As well as having a high Exhaustion Value, it is also important for a dye compound to have a high dye-fibre covalent Fixation Value (F). The Fixation Value (F) of a reactive dye compound is a measure of the extent of covalent bonding with the substrate based on the dye originally absorbed during the dyeing process. Thus 100% Fixation means that 100% of the absorbed dye covalently bonds to the substrate. Thus, there is clearly a need to provide dye compounds having increased Fixation Values. A high Fixation Value can result in a simplification of the post dyeing "soaping off process" traditionally associated with fiber reactive dye compounds. In particular, a high Fixation Value can result in a reduced time spent on the "soaping off process" together with a reduced cost.

It has now been surprisingly found that a new class of fibre reactive dye compounds derived from vinyl sulphone dyes and their precursors such as chloroethylsulphone, sulphatoethylsulphone, phosphoethylsulphone, and other blocked ethyl sulphones as known in the art, comprising at least one chromophore group, at least one $SO_2C_2H_4$ group and at least one A(C=O)R* group, such as citrate, exhibit significantly increased values of Exhaustion (E) and Fixation (F). These dyes can be used on a wide variety of substrates. They are particularly useful for cellulosic substrates, such as cotton, and show significant improvements in terms of decreasing the amount of spent dyestuff in effluent, increasing dye affinity to the substrate, increasing the efficiency of the dye-substrate covalent reaction, and simplifying the post dyeing "soaping off process" traditionally associated with reactive dyes. In addition, the compounds of the present invention provide significantly more intense dyeings, and can be used for both high and low temperature dyeing, hence reducing the cost of the dyeing process. Furthermore, the compounds of the present invention can be used together with specific chromophores for cellulose substrate dyeing leading to significantly reduced levels of salt needed for dyeing.

### Summary of the Invention

According to the present invention there is provided a reactive dye compound according to claim 1.

The compounds of the present invention exhibit increased Exhaustion (E), Fixation (F) and Efficiency (T) values and provide improvements in terms of reducing spent dyestuff in effluent, increasing dye affinity to the substrate, increasing the efficiency of the dye-substrate covalent reaction, ability to carry out the long-liquor dyeing process at room temperature as well as at elevated temperatures, and simplifying the post dyeing "soaping off process" traditionally associated with fiber reactive dyes. In addition, the compounds of the present invention provide significantly more intense dyeings, i.e. greater colour intensity in the dyed substrate, without compromising levelness. Typical Exhaustion Values for the compounds and products herein are greater than 95%. Typical Fixation Values for the compounds and products herein are greater than 95%.

### Detailed Description of the Invention

As used herein the term "reactive dye" means a dye containing one or more reactive groups, capable of

forming covalent bonds with the substrate to be dyed, or a dye which forms such a reactive group in situ.

As used herein the term "Exhaustion" in relation to reactive dyes means the percentage of dye which is transferred from a solution of the dye to the substrate to be treated at the end of the dyeing process, before rinsing and soaping. Thus 100% Exhaustion means that 100% of the dye is transferred from the dye solution to the substrate.

As used herein the term "Fixation" in relation to reactive dyes means the percentage of dye which covalently bonds with the substrate, based on the dye originally absorbed during the dyeing process. Thus 100% Fixation means that 100% of the dye absorbed is covalently bonded with the substrate.

The total efficiency of reactive dyes can be measured by their Efficiency Value (T) which can be calculated from the Exhaustion Value (E) and Fixation Value (F) using the following equation:

$$\%T = (FxE)/100$$

The compounds of the present invention comprise a chromophoric moiety, at least one $SO_2C_2H_4$ group linked to the chromophore group either directly via the sulphur atom or via a linking group L and a A(C=O)R* group wherein A is selected from O or S, and R* is an organic residue comprising at least one nucleophilic group.

Chromophoric Moiety

The reactive dye compounds herein can comprise one or more chromophoric moieties (D). In reactive dye compounds comprising two or more chromophoric moieties these can be the same or different. Preferably the reactive dye compounds herein comprise from one to three chromophoric moieties, preferably one or two chromophoric moieties, preferably one.

Any chromophoric moieties suitable for use for dyeing substrates can be used in the present invention. The term chromophore as used herein means any photoactive compound and includes any coloured or non-coloured light absorbing species, eg. fluorescent brighteners, UV absorbers, IR absorbing dyes.

Suitable chromophoric moieties for use in the dye compounds herein include the radicals of monoazo, disazo or polyazo dyes or of heavy metal complex azo dye derived therefrom or of an anthraquinone, phthalocyanine, formazan, azomethine, dioxazine, phenazine, stilbene, triphenylmethane, xanthene, thioxanthene, nitroaryl, naphthoquinone, pyrenequinone or perylenetetracarbimide dye.

Suitable chromophoric moieties for use in the dye compounds herein include those disclosed in EP-A-0,735,107 (Ciba-Geigy), incorporated herein by reference, including the radicals described therein which contain substituents customary for organic dyes, such as sulphonate substituents which enhance the water solubility of the dye compound.

Most preferred chromophoric D groups for use herein are polysulphonated azo chromophores such as those present in Procion (RTM) dyes commercially available from BASF, Drimalan (RTM) dyes commercially available from Clariant, Drimarene (RTM) dyes commercially available from Clariant and Levafix (RTM) and Remazol (RTM) commercially available from Dystar.

A(C=O)R* group

At least one of the $SO_2C_2H_4$ groups is substituted on the terminal carbon atom with at least one -A(C=O)R* group wherein A is selected from S or O, more preferably O.

R* is selected from the groups listed in claim 1.

In the definition of R* above, where the term "substituted" is used such substitution may be with one or more substituents. Such substituents include, but are not limited to, those listed in C. Hansch and A. Leo, Substituent Constants for Correlation Analysis in Chemistry and Biology (1979), hereby incorporated by reference herein. Preferred substituents include, but are not limited to, alkyl, alkenyl, alkoxy, hydroxy, oxo, amino, aminoalkyl (e.g.aminomethyl, etc.), cyano, halo, carboxy, alkoxyacetyl (e.g. carboethoxy, etc.), thio, aryl, cycloalkyl, heteroaryl, heterocycloalkyl, (e. g.piperidinyl, morpholinyl, piperazinyl, pyrrolidinyl, etc.), imino, thioxo, hydroxyallcyl, aryloxy, arylalkyl, and combinations thereof. R# corresponds to an amino acid sidechain. For examples of such amino acids, cf. "Organic Chemistry" by Graham Solomons, 5th Edition, Wiley, New York, 1992, p1094 - 1095.

Preferred R* groups for use herein are selected from $(CH_2)_nSH$, $(CH_2)_nNH_2$, $C_5H_4N$, $CH(CH_3)OH$, $C(OH)(CH_2COOH)_2$, $CH_2C(OH)(COOH)CH_2COOH$, $CH(R\#)NH_2$, $CH(CH_3)OH$, $CH(OH)CH_2COOH$, $CH_2C(H)(OH)COOH$, $C(H)(OH)C(H)(OH)COOH$, $C_6H_4OH$, $C_6H_4NH_2$ and $C_5H_4N$.

Particularly preferred R* groups herein are groups derived from hydroxy carboxylic acids such as citric acid, lactic acid, tartaric acid, malic acid, salicylic acid, and the like, including structural isomers thereof (eg. in the case of citric acid R* can be $C(OH)(CH_2COOH)_2$ and $CH_2C(OH)(COOH)CH_2COOH$) and polymers thereof (eg. in the case of

polymerisation of two lactic acid molecules R* is $CH(CH_3)O(CO)CH(CH_3)OH$.

Particularly preferred R* group from the viewpoint of providing reactive dye compounds having excellent dye properties are those derived from citric acid, including $C(OH)(CH_2COOH)_2$ and $CH_2C(OH)(COOH)CH_2COOH$. It will be understood by those skilled in the art that in the case of unsymmetrical compounds having more than one carboxylic acid group, for example, citric acid and malic acid, that a mixture of dye compounds will be obtained due to there being different carboxylic acid reactive groups in the molecule which can attach to the heterocyclic ring. It is also to be noted that for R* groups which are hydroxy-terminated, such as for example lactic acid or citric acid, it is possible for polyester formation to occur via reaction of the lactic acid moiety (or citric acid) with another lactic acid (or citric acid) moiety. In the case of lactic acid polymerisation of two lactic acid molecules therefore the R* group would be $CH(CH_3)O(CO)CH(CH_3)OH$. Depending on the reaction conditions therefore, a mixture of dye compounds can be obtained, for example in the case of citric acid, a mixture of one or more of the mono-citrate compounds (there could be two different isomers of these depending on which carboxylic acid group attaches to the heterocyclic ring), bis-citrate compounds (including different structural isomers), and compounds formed from a citric acid polymer.

Without wishing to be bound by theory, it is believed that high fixation values for the reactive dye compounds herein derived from hydroxy carboxylic acids such as citric acid is the result of preferential bonding of the reactive dye to nucleophiles on the fibre vis à vis nucleophiles in solution. Additionally, any hydrolysed dye may be reactivated by carboxylic acids present in solution.

Preferred reactive dye compounds of the present invention may be represented by the following formula (I):

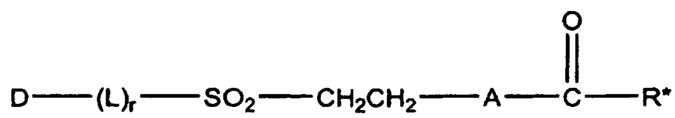

wherein:

D is a chromophore group;

r is 0 or 1;

L is a linking group selected from NH, $(CH_2)_n$, $N-(CH_2)_nN$, $-(CH_2)_n-N$,

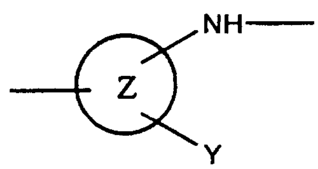
,

NR (R is C1-C4 alkyl),

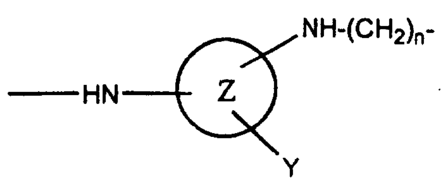

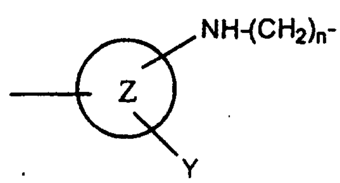

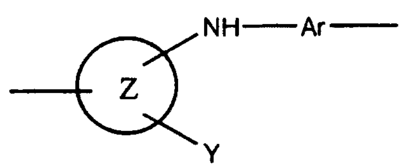
,

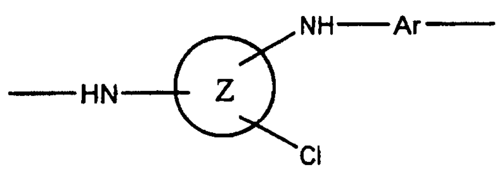

,

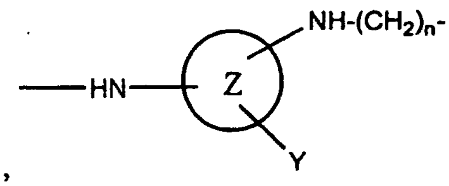

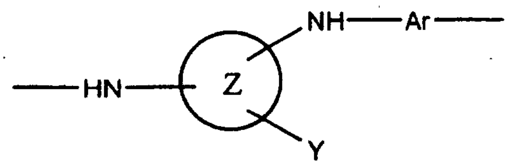

,

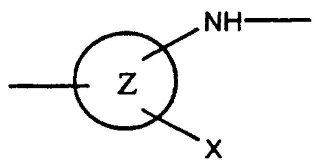

,

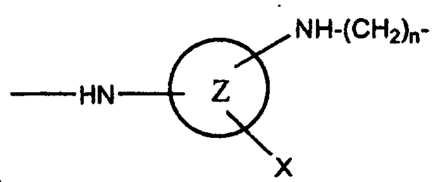

,

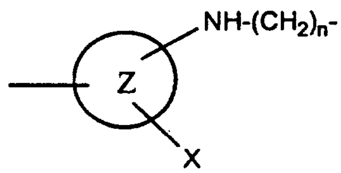

,

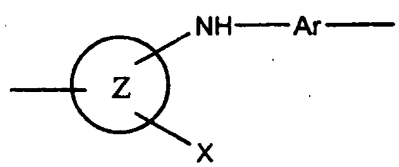

,

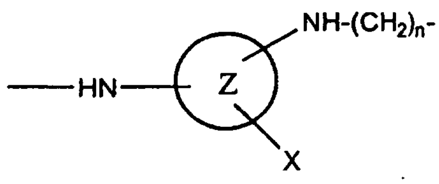

,

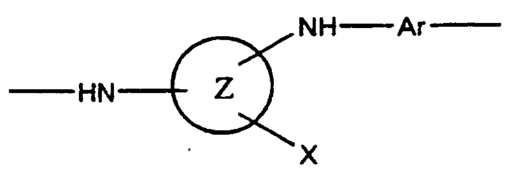

wherein Ar is an aryl group, preferably benzene, Y is halogen or O(C=O)R*, n is an integer of from 1 to 4, Z is a nitrogen-containing heterocycle, X is selected from thio-derivatives, halogen (preferably fluorine and chlorine), amines, alkoxy groups, carboxylic acid groups, CN, $N_3$, and quaternized nitrogen derivatives, Q+;

A is O or S,

R* is selected from $(CH_2)_nSH$, $(CH_2)_nNH_2$, $CH(CH_3)OH$, $C(OH)(CH_2COOH)_2$, $CH_2C(OH)(CO_2H)CH_2COOH$, C (OH)(H)CH2COOH, CH2C(H)(OH)COOH, C(OH)(H)C(OH)(H)COOH, derivatives of hydroxy carboxylic acid polymerisation (eg. in the case of polymerisation of two lactic acid molecules R* is $CH(CH_3)O(CO)CH(CH_3)OH$), $(CH_2)_nNHR_1$, $CH_2NR_1R_2$, $CH_2NHNH_2$, $CH_2NHOH$, $CH_2SMe$, $CH(NH_2)(CH_2)_n(COOH)$, $CH(NH_2)CH_2SMe$, $CH(NH_2)CH_2SSCH_2CH(NH_2)COOH$, $CH(NH_2)CH_2SO_3H$, $C_6H_4OH$, $C_6H_4COOH$, $C_6H_4NH_2$, $C_5H_4N$, $(CH_2)_nC_5H_4N$, $CH(R\#)NH_2$, $(CH_2)_n$-$SSO_3^-$, $(CH_2)$n-S-S-$(CH_2)_n$, peptide or polypeptide, wherein $R_1$ and $R_2$ is independently selected from $C_1$-$C_4$ alkyl, wherein n is an integer in the range of 1 to 4 wherein within the same molecule n is not necessarily the same integer and where R# corresponds to an amino acid sidechain.

Nitrogen-containing Heterocycle (Z)

Suitable nitrogen containing heterocycles for use herein include monocyclic, bicyclic or polycyclic, unsaturated heterocycles containing at least one nitrogen heteroatom. When monocyclic rings are used, they are preferably selected

from unsaturated rings having from about 3 to about 7 ring atoms, especially 5 or 6 ring atoms, comprising from about 1 to about 3 nitrogen heteroatoms, preferably 2 or 3 nitrogen heteroatoms. When bicyclic heterocycles are used, they preferably comprise an unsaturated nitrogen containing heterocycle having 3 to 7 ring atoms, preferably an unsaturated nitrogen containing heterocycle having 5 or 6 ring atoms comprising 1 or 2 nitrogen atoms, fused to a 5 to 7 membered carbocycle preferably a 6-membered unsaturated carbocycle. When bicyclic heterocycles are used, the oxy carbonyl substituents are preferably attached to the nitrogen containing heterocyclic ring.

Preferred for use herein are 5 or 6 membered unsaturated nitrogen containing monocyclic heterocyclic rings comprising 2 or 3 nitrogen heteroatoms or bicyclic rings containing a 5 or 6 membered unsaturated heterocyclic ring containing 2 nitrogen heteroatom fused to a 6 membered unsaturated carbocycle.

Examples of suitable heterocycles for use herein include, but are not necessarily limited to triazine, pyrimidine, quinoxaline, pyrimidinone, phthalazine, pyridazone and pyrazine.

Preferred for use in the compounds herein are triazine, pyrimidine and quinoxaline.

Suitable thio-derivatives for use herein include, but are not necessarily limited to groups having the formula SR' wherein R' is selected from H or alkyl or preferably short chain alkyl (preferably less than about 6 carbon atoms), alkanol, alkyl carboxylate, alkylamide, alkylsulphonate, alkyl phosphonate, alkyl thiosulphonate, alkylamine, alkyl thiosulphate, aryl sulphonate, aryl carboxylate, aryl phosphate, aryl amine, cyanates, sulphonates, branched alkyl thio carboxylates, branched alkanol thiols, guanides, alkyl-α-amino-α-carboxylate, (di) thio alkyl esters of glycerol, alkyl thiol alkyl esters of glycerol, alkyl esters, mono thio diesters, thiol alkyl esters of ethylene glycol, alkyl thiol alkyl ester of ethylene glycol and alkyl thiolipoates. Preferably R' is selected from alkyl carboxylates, alkanols and alkylamines.

Examples of suitable thio-derivatives include SR' groups where R' is selected from $C_1$-$C_4$ alkyl, $(CH_2)_nCOOH$, $(CH_2)_nCONH_2$, $(CH_2)_nSO_3H$, $(CH_2)_nCOOM$, $(CH_2)_nPO_3H$, $(CH_2)_nOH$, $(CH_2)_nSSO_3^-$, $(CH_2)_nNR''_2$, $(CH_2)_nN^+R''_3$, $PhSSO_3^-$, $PhSO_3H$, $PhPO_3H$, $PhNR''_2$, $PhN^+R''_3$, -CN, $SO_3^-$, $(CH_2)_2CH(SH)R''(CH_2)_3COOH$, $-CH_2CHOHCH_2SH$, and

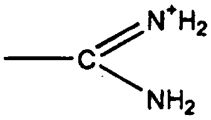

;

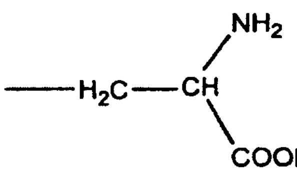

,

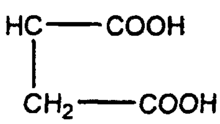

,

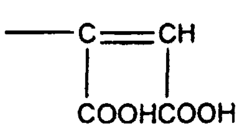

,

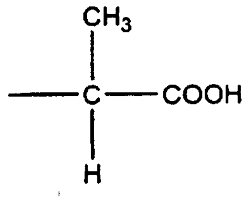
,

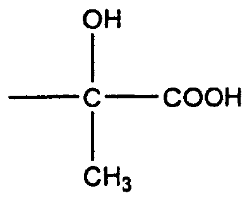

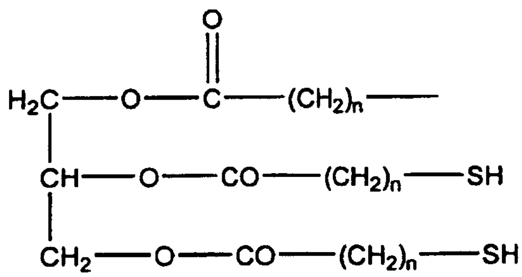
,

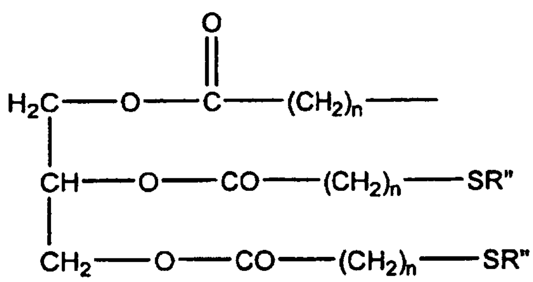
,

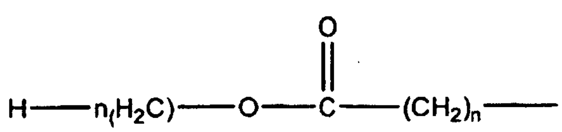
,

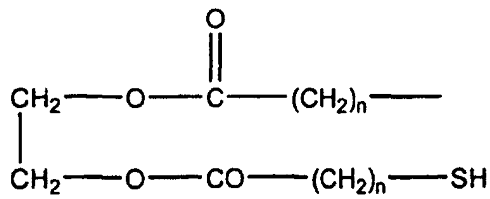,

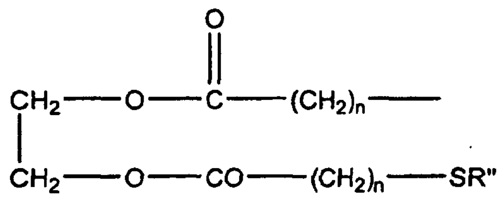,

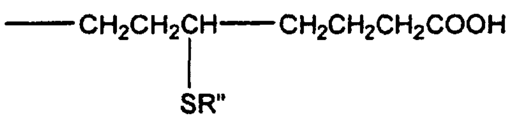,

$- CH_2CH_2NH_2$.

n is an integer in the range of 1 to 4 wherein within the same molecule n is not necessarily the same integer; and M is a cation of alkaline earth metal, alkali metal, $NH_4^+$ or $NR''_3^+$ and wherein R" is $C_1$-$C_4$ alkyl.

Preferred thio-derivatives for use herein have the formula SR' wherein R' is $(CH_2)_nCOOH$, $(CH_2)_nOH$, and $(COOH)CH_2CH_2(COOH)$, wherein n is an integer from 1 to 4.

Especially preferred for use herein are thioglycolate (R' = $CH_2COOH$) thioethanol (R'= $(CH_2)_2OH$) and thiosuccinate (R'= $(COOH)CH_2CH_2(COOH)$), especially thioglycolate.

Suitable quaternized nitrogen derivatives for use herein can be represented by Q+ wherein Q is selected from amines, saturated or unsaturated, substituted or unsubstituted nitrogen containing heterocycles having from about 3 to about 8 ring members and comprising at least one nitrogen heteroatom. Preferred substituents are carboxylates, amides, $C_1$-$C_4$ alkyl and alkyl carboxylates.

Particularly preferred for use herein are Q groups selected from:

$NR''_3$,

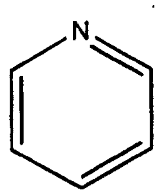,

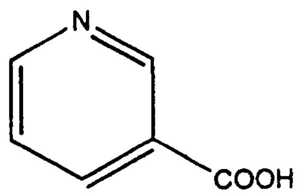 (nicotinate),

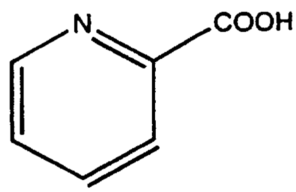

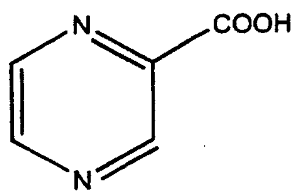 ,

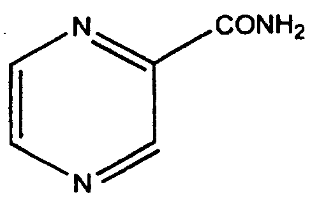

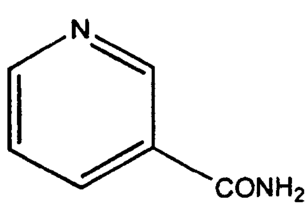 ,

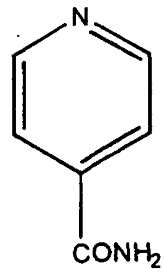
,

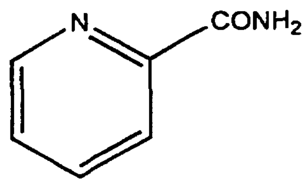

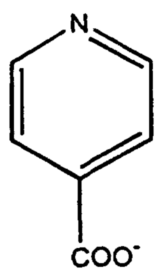
(isonicotinate),

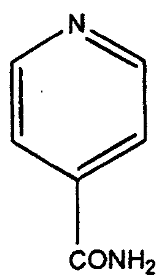
,

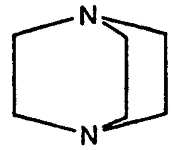
(DABCO),

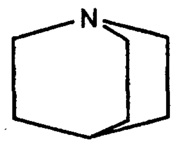
,

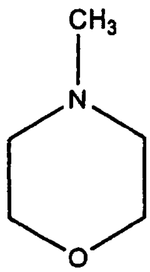
,

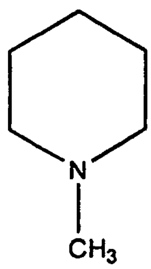
,

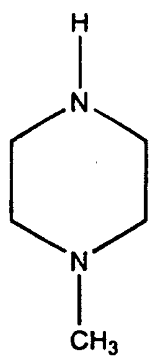
,

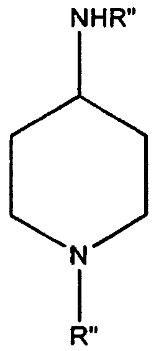

,

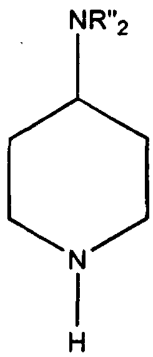

,

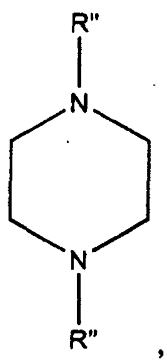

,

$(CH_3)_2N\text{-}NH_2$;

$N(CH_3)_2CH_2COOH$ (dimethylaminobetaine);

$N(CH_3)_2(CH_2)_nNH_2$

$N(CH_3)_2(CH_2)_nN^+R''_3$;

$N(CH_3)_2CH_2CONH_2$;

wherein R" is $C_1$-$C_4$ alkyl and n is an integer of from 1 to 4.

Particularly preferred quaternized nitrogen derivatives for use herein are nicotinate, diazabicyclooctane (DABCO), dimethylaminobetaine and isonicotinate, especially nicotinate.

The quaternized nitrogen derivative is attached to the nitrogen-containing heterocycle via its tertiary nitrogen atom.

Preferred X groups include Y, SR", halogen (preferably F or Cl), NR"H, NR"2, OR", COOH, SCN, SS03, SO3, NR1R2, CN, N3 and quaternized nitrogen derivatives Q+, wherein R" is C1-C8 alkyl, or aryl and wherein Q, R1 and R2 are as defined above.

Particularly preferred X groups for use herein are Y, halogen (fluorine and chlorine) and quaternized nitrogen derivatives.

A particularly preferred reactive dye compound of the present invention wherein the O(C=O)R* group in formula (I) above is derived from citric acid has the following structure (Ia):

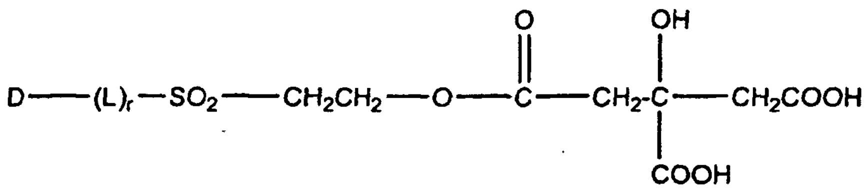

Ia

wherein D, L, r are as defined above.

Another preferred reactive dye compound of the present invention wherein the O(C=O)R* group in formula (I) above is derived from citric acid has the following structure (Ib). This compound below (Ib) and the compound above (Ia) differ due to a different -COOH group of the citric acid attaching to the $-SO_2-CH_2CH_2-$ group.

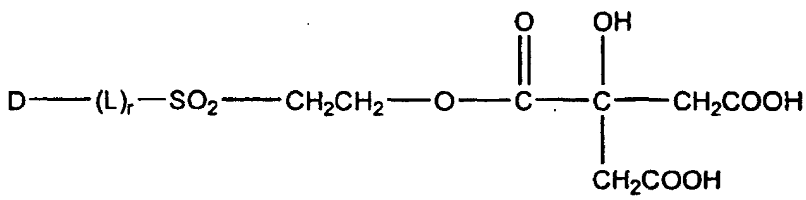

Ib

wherein D, L and r are as defined above.

Other dye compounds according to the present invention may be represented by the formula (II):

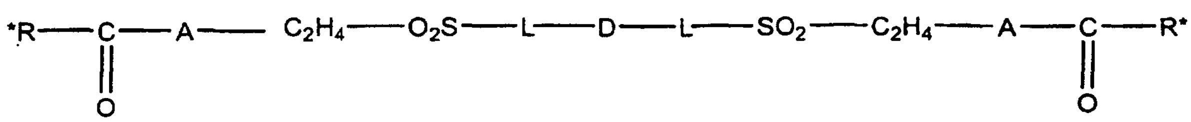

wherein: D, L, A and R* are the same or different and are as defined above in relation to formula (I).

Yet other dye compounds according to the present invention may be represented by the formula (III):

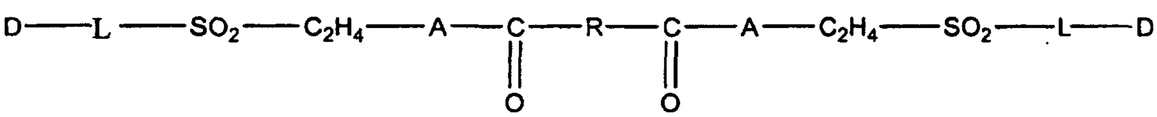

wherein: D, L, A are the same or different and are as defined above in relation to formula (I) and R is derived from R* as defined above, for example carboxylic acids having more than one carboxylic acid groups.

Other dye compounds according to the present invention may be represented by the formula (IV):

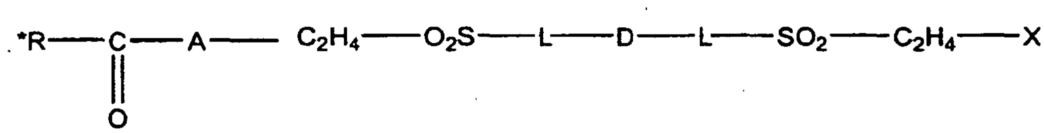

wherein: D, L, A and R* are as defined above in relation to formula (I) and wherein X is selected from thio-derivatives, halogen (preferably fluorine and chlorine), amines, alkoxy groups, carboxylic acid groups, CN, $N_3$, and quaternized nitrogen derivatives, Q+.

The present invention furthermore relates to processes for the preparation of dyes herein. In general, dyes herein are prepared by a process which comprises the steps of reacting a first starting material (preferably one mole) with a second starting material (preferably one mole), the first starting material comprising at least one chromophore, at least one $SO_2C_2H_4$ group which is attached to the chromophore group either directly via the sulphur atom of the $SO_2C_2H_4$ group or via a linking group (for example a Remazol dye), the second starting material comprising an oxy- or thio-carbonyl group (for example citric acid). It is preferable that the reaction is carried out at a pH of between 2 to 8, preferably 3 to 5 and over several hours, preferably l to 5 hours, more preferably 2-3 hours.

Compounds herein having the formula (I) are prepared by reacting a first starting material (preferably one mole) with a second starting material (preferably one mole), the first starting material containing a D-$(L)_r$-$SO_2$-$CH_2CH_2$-group as defined above (for example a Remazol dye, such as Remazol Brill Blue RS commercially available from Dystar), the second starting material containing an A(C=O)R* group (for example citric acid (polymerized or unpolymerized), lactic acid (polymerized or unpolymerized), salicylic acid, tartaric acid, malic acid, nicotinic acid, isonicotinic acid, etc). It is preferable that the reaction is carried out over several hours (2-5 hours). In the case of hydroxyacids such as citirc acid, lactic acid, tartaric acid, and the like, it is particularly important to add the acid dropwise over several hours, preferably from about 1 to about 5 hours, preferably from about 1 to about 3 hours.

In order to ensure that the second starting material containing the A(C=O)R* group bonds to the vinyl sulphone group via the oxy-carbonyl or thio-carbonyl group it is preferable to carry out the reaction under acidic conditions, preferably at a pH of from about 1 to about 8, preferably from about 2 to about 8, more preferably from about 3 to about 5.

In general, dyes having the formula (II) - (IV) can be prepared by using the same general chemistry as for dyes of formula (I) by reacting together suitable starting materials, in suitable amounts.

Depending upon the reaction conditions (for example, amounts of each starting material, form of each starting material eg. in the case of hydroxyacids polymerized/unpolymerized), mixtures of different dye compounds may be obtained in the final product, such mixtures containing for example, products formed from further substitution reactions , structural isomers (eg. in the case of citric acid which an unsymmetrical molecule having two carboxylic acid groups), products formed from polymerisation of hydroxy acids (eg. citric acid and lactic acid. In the case of dipolymerized lactic acid for example the R* group will be $CH(CH_3)O(CO)CH(CH_3)OH$).

Hence according to another aspect of the present invention there is provided the product obtainable by any of the processes detailed herein.

In particular, there is provided a product obtainable by a process wherein the process comprises the steps of reacting a first starting material (preferably one mole) with a second starting material (preferably one mole), the first starting material comprising at least one chromophore, at least one $SO_2C_2H_4$ which is attached to the chromophore group either directly via the sulphur atom of the $SO_2C_2H_4$ group or via a linking group (for example a Remazol dye), the second starting material comprising an oxy- or thio-carbonyl group (for example citric acid). It is preferable that the reaction is carried out at a pH of between 2 to 8, preferably 3 to 5 and over several hours, preferably 1 to 5 hours, more preferably 2-3 hours.

The dye compounds herein are suitable for dyeing and printing a wide variety of substrates, such as silk, leather, wool, polyamide fibers and polyurethanes, keratin fibres such as hair, and in particular cellulosic materials, such as the natural cellulose fibres, cotton, linen, hemp and the like, paper, and also cellulose itself and regenerated cellulose, and hydroxyl-containing fibres contained in blend fabrics, for example blends of cotton with polyester or polyamide fibres.

The dye compounds of the present invention can be applied and fixed to the substrate in various ways, in particular in the form of a solid mixture, aqueous dye solutions and printing pastes. Thus according to the present invention there is provided a dye composition comprising one or more of the dye compounds described herein together with any carrier material suitable for use in a dye composition.

Preferred dye compositions herein comprise an acidic buffer material. Any acidic buffer suitable for use in dye compositions can be used herein. An example of a suitable buffer is a mixed phosphate buffer.

When the dye composition herein is in the form of a paste a preferred ingredient is a thickening agent. Any suitable thickening agents suitable for use in reactive dye compositions can be used herein.

When the dye composition is in the form of an aqueous solution or aqueous gel/paste, the dye composition

preferably has a pH of from about 2 to about 8, more preferably from 2 to 5, especially from 2 to 3.

The dyeing and printing processes which can be used with the dyes herein are conventional processes which are well known and which have been widely described in the technical and patent literature. The dye compounds herein are suitable for dyeing both by the exhaust method (long liquor) and also by the pad-dyeing method, whereby the goods are impregnated with aqueous, salt-containing or salt-free dye solutions and the dye is fixed after an alkali treatment or in the presence of alkali, if appropriate with the application of heat. The dye compounds herein are also suitable for the cold pad-batch method, after which the dye together with the alkali is applied using a pad-mangle, the fabric batched on a roll. A dye-fibre covalent reaction occurs over several hours of storage at room temperature. Alternatively, padded or printed goods may be fixed by a steaming process using steam temperatures between 100-130°C. After fixing, the dyeings or prints are thoroughly rinsed with cold and hot water, if appropriate with the addition of an agent acting as a dispersant and promoting the diffusion of the non-fixed portions.

Thus in accordance with another aspect of the present invention there is provided a use of the reactive dyes of the present invention for dyeing and printing substrates such as cotton, wool, nylon, silk, keratin, hair, leather, paper and the like. The compounds herein can be used in methods of dyeing all of the substrates listed above by applying an aqueous solution of one or more of the reactive dyes of the present invention to the substrate to be dyed under suitable conditions of pH and temperature.

The following examples serve to illustrate the compounds and compositions of the present invention.

The starting compounds and components given in the examples below can be used in the form of the free acid or in the form of their salts. As discussed above, the products obtained in the examples below may comprise mixtures of different dye compounds. In the Examples below all the starting materials are commercially available. In particular the Remazol dyes are available from Dystar Textilfarben, GmbH & Co., Deutschland KG, BU -R/F & E, Werk Hochst, Building G834, D-65926 Frankfurt am Main, Germany, and the Sumifix dyes are available from Sumitomo Chemical Co. Ltd., 3-1-98, Kasugade-naka, Konohana-ku, Osaka 554, Japan.

## Examples

### Example 1 (RBBRS/CA dye)

The compound denoted by (1) below was prepared according to the reaction scheme in Diagram 1.

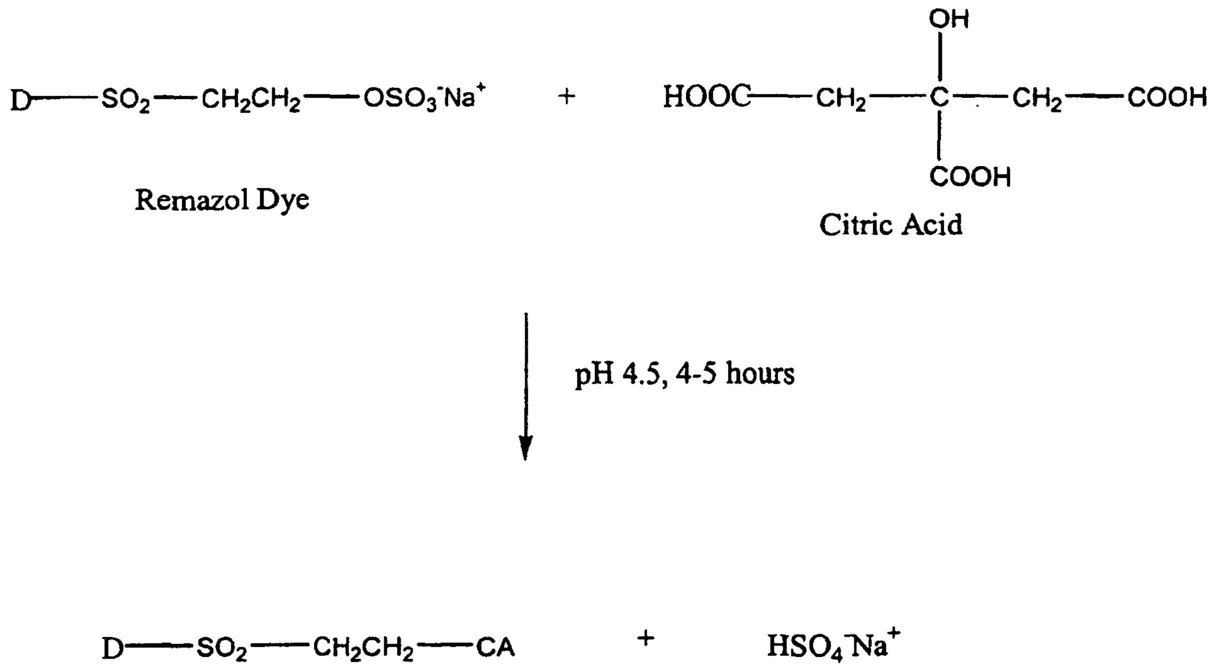


(1)

In the reaction mechanism above CA denotes the -O(C=O)R* group in formula (I) above derived from citric acid, i.e. $-C(OH)(CH_2COOH)_2$ or $-CH_2C(OH)(COOH)CH_2COOH$. It should be noted that the citric acid moiety is bonded to the heterocycle via one of its carboxylic groups. It will be understood by those skilled in the art that in the case of unsymmetrical compounds having more than one carboxylic acid group, for example, citric acid and malic acid, that a mixture of dye compounds can be obtained due to there being different carboxylic acid reactive groups in the molecule which can attach to the vinyl sulphone group. However it is believed that in the case of citric acid that the citric acid reacts primarily via its carboxylic acid group to give a compound wherein the R* group is $C(OH)(CH_2COOH)_2$. 0.005 moles of pure Remazol Brill Blue RS dye is dissolved in 150ml of distilled water in a 400ml flask. The temperature of the reaction system is adjusted and maintained between 20°C. The pH of the dye solution is adjusted to 5-5.5 using solid sodium carbonate. 0.005 moles of citric acid is dissolved in 50ml of distilled water. The pH of this solution is adjusted to around 4.5. The citric acid solution is added slowly to the solution of dye. The rate of addition is such that the addition takes around 2 hours to complete. During the process of addition, the temperature of the reaction system is maintained at 20°C. After completion of the addition of citric acid, the reaction is allowed to continue for 4-5 hours. The end-of-reaction point is indicated by the pH of the reaction system remaining constant for more than 5 minutes. At this point dye compound (1) is obtained. Using 6N HCl, the pH of the system is then reduced to below pH2.5 to terminate the reaction. KSCN (25% of the total solution) is then added to the reaction mixture in order to precipitate the dye. Filtration using Whatman filter paper follows. The precipitate is then washed with acetone for 5-6 times (50ml of acetone is used each time) to obtain the final dye product (in fine powder form of deep blue colour).

<u>Example 2 (RBBRS/TA dye)</u>

The compound denoted (2) is prepared according to the reaction scheme of Diagram 2.

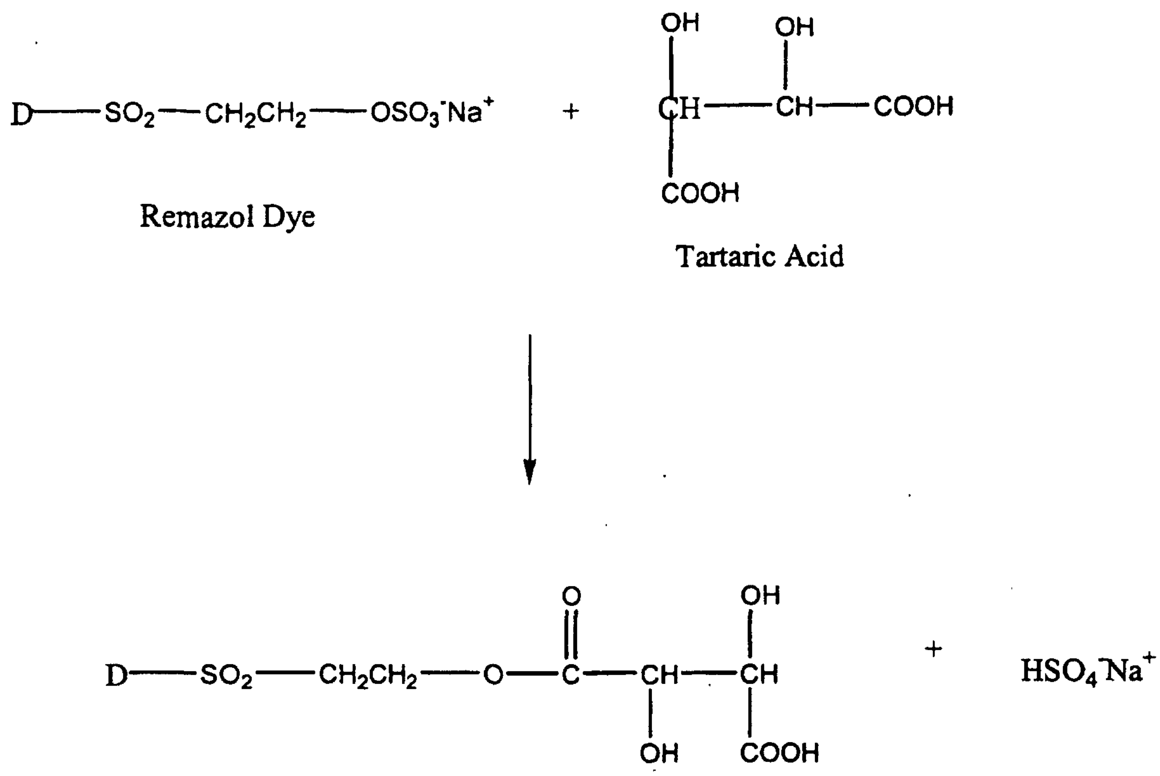


(2)

0.005 moles of pure Remazol Brill Blue RS Dye is dissolved in 150ml of distilled water in a 400ml flask. The temperature of the reaction system is adjusted and maintained at 20°C. The pH of the dye solution is adjusted to about 4.5 using solid sodium carbonate. 0.005 moles of tartaric acid is dissolved in 50ml of distilled water. The pH of this tartaric acid solution is adjusted to around 4.5. The tartaric acid solution is slowly added into the solution of dye. The rate of addition is such that addition takes around 2 hours to complete. During the process of addition, the temperature of the reaction system is maintained at 20°C. After completion of the addition of tartaric acid, the reaction is allowed to continue for 4-5 hours. The end-of-reaction point is indicated by the pH of the reaction system remaining constant for more than 5 minutes. At this point, the dye compound (2) is obtained. Using 6N HCl, the pH of the system is then reduced to below pH 2.5 to terminate the reaction. KSCN (25% of the total solution) is then added to the reaction mixture in order to precipitate the dye. Filtration using Whatman filter paper follows. The precipitate is then washed with acetone for 5-6 times (50ml acetone used each time) to obtain the final dye product (in fine powder form of deep blue colour).

<u>Example 3 (RBBRS/LA dye)</u>

A compound denoted by (3) is prepared according to the reaction scheme in Diagram 3.

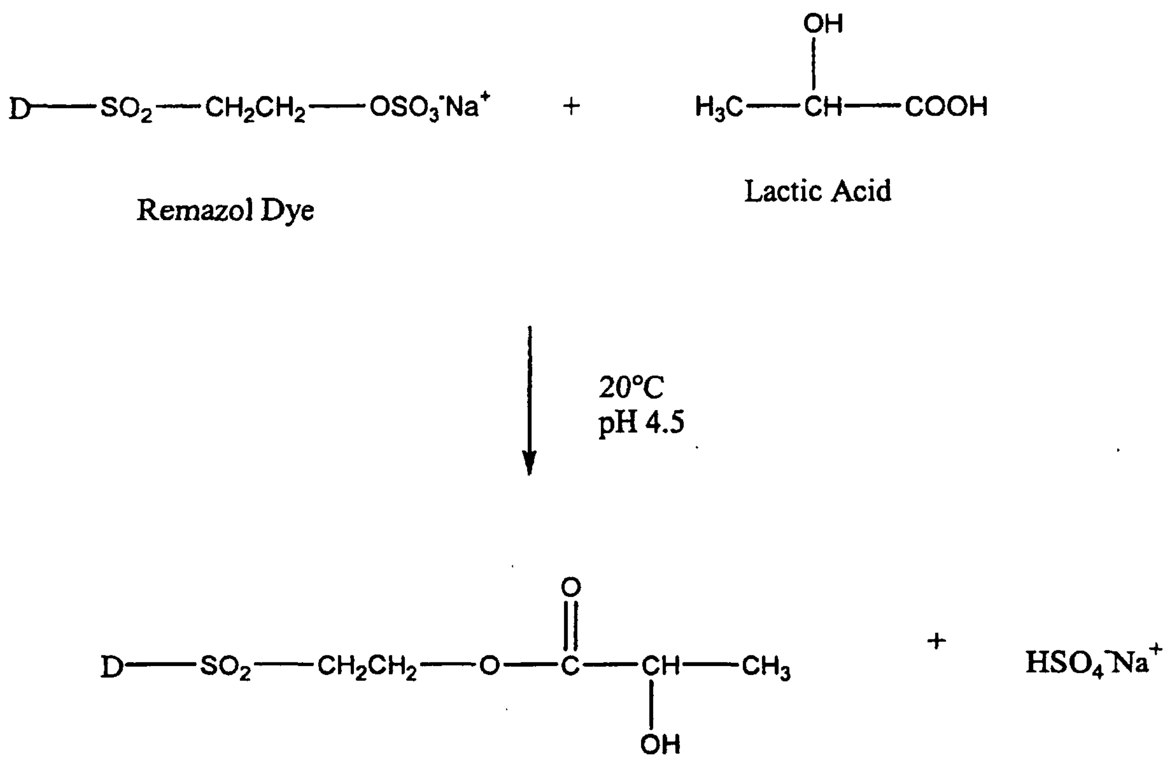


(3)

0.005 moles of pure Remazol Brill Blue R Special dye is dissolved in 150ml of distilled water in a 400ml flask. The temperature of the reaction system is adjusted and maintained at around 20°C. The pH of the dye solution is adjusted to 5-5.5 using solid sodium carbonate. 0.005 moles of lactic acid is dissolved in 50ml of distilled water. The pH of the lactic acid solution is adjusted to around 4.5. The lactic acid solution is slowly added into the solution of dye. The rate of addition is such that the addition takes around 2 hours to complete. During the process of addition, the temperature of the reaction system is maintained between 20°C. After completion of addition of lactic acid, the reaction is allowed to continue for 3-4 hours. The end-of-reaction point is indicated by the pH of the reaction system remaining constant for more than 5 minutes. At this point, the dye (2) is obtained. Using 6N HCl, the pH of the system is then reduced to below around pH 2.5 to terminate the reaction. KSCN (25% of the total solution) is then added to the reaction mixture in order to precipitate the dye. Filtration using Whatman filter paper follows. The precipitate is then washed with acetone for 5-6 times (50ml of acetone each time) to obtain the final dye product (in fine powder form of deep blue colour).

Example 4

The dye Sumifix Supra Brill Red 2BF has the following structure:

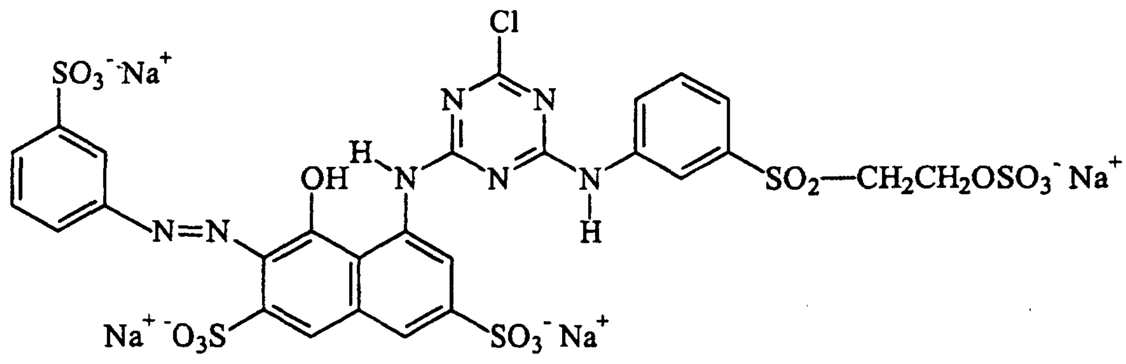

This dye can be represented as:

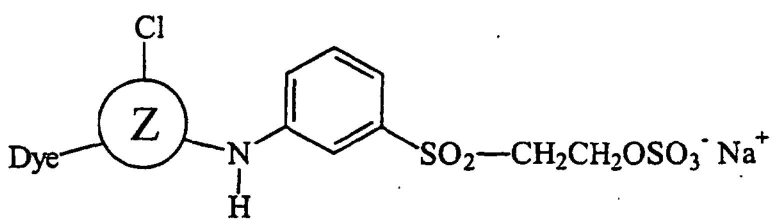

0.005 moles of this dye is dissolved in water and the pH of this dye is dissolved in water and the pH set at 3.5. Citric acid solution in water (0.005 moles) is adjusted to pH 3.5 ($Na_2CO_3$) and dripped slowly into the above dye solution over 4 hours (30C). The product contains the following new dye:

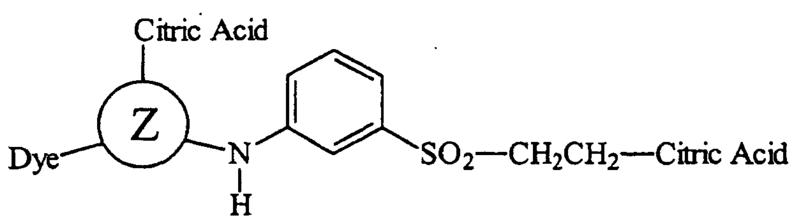

In the reaction mechanism above Citric Acid denotes the -O(C=O)R* group in formula (I) above derived from citric acid, i.e. $-C(OH)(CH_2COOH)_2$ or $-CH_2C(OH)(COOH)CH_2COOH$. It should be noted that the citric acid moiety is bonded to the heterocycle via one of its carboxylic groups. It will be understood by those skilled in the art that in the case of unsymmetrical compounds having more than one carboxylic acid group, for example, citric acid and malic acid, that a mixture of dye compounds can be obtained due to there being different carboxylic acid reactive groups in the molecule which can attach to the vinyl sulphone group. However it is believed that in the case of citric acid that the citric acid reacts primarily via its carboxylic acid group to give a compound wherein the R* group is $C(OH)(CH_2COOH)_2$.

Example 5

The dye Remazol Brilliant Orange 3RS has the following structure:

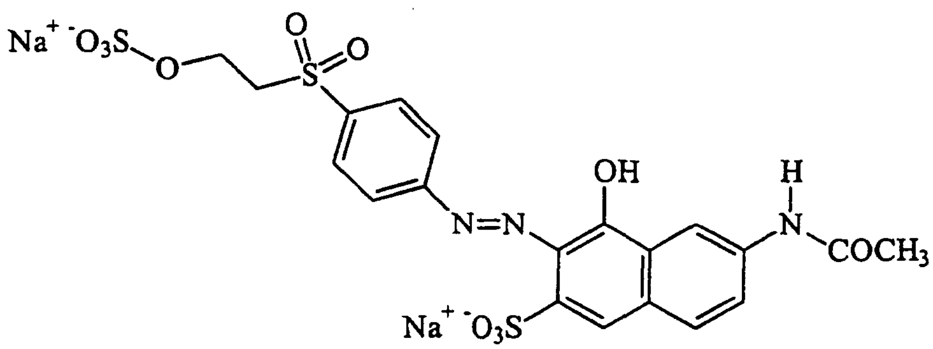

This dye can be represented as:

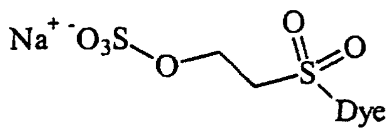

This dye can be activated to its vinyl sulphone analogue by heating at pH10. Thus 0.005 moles of the SES dye is heated for 20 minutes at 60C at pH10(sodium carbonate). The pH is maintained as necessary at pH10. Capillary electrophoresis is used to follow the reaction:

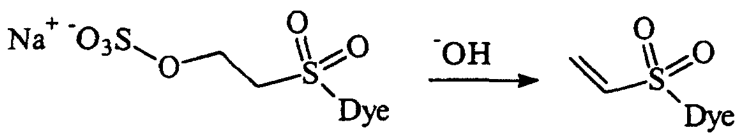


This vinyl sulphone dye solution is adjusted to pH3.5 and added slowly at 35C to a stirred solution of citric acid (0.010moles). After 4 hours CE analysis shows that the reaction is complete.

The final dye product was also characterised by infra-red, which showed the presence of two new ester carbonyl stretching frequencies at 1755cm$^{-1}$ and 1744cm$^{-1}$, both of which are absent from the sulfatoethyl sulfone form and the vinyl sulfone form.

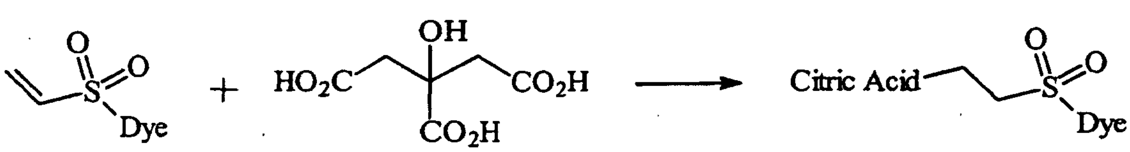

In the reaction mechanism above Citric Acid denotes the -O(C=O)R* group in formula (I) above derived from citric acid, i.e. $-C(OH)(CH_2COOH)_2$ or $-CH_2C(OH)(COOH)CH_2COOH$. It should be noted that the citric acid moiety is bonded to the heterocycle via one of its carboxylic groups. It will be understood by those skilled in the art that in the case of unsymmetrical compounds having more than one carboxylic acid group, for example, citric acid and malic acid, that a mixture of dye compounds can be obtained due to there being different carboxylic acid reactive groups in the molecule which can attach to the vinyl sulphone group. However it is believed that in the case of citric acid that the citric acid reacts primarily via its carboxylic acid group to give a compound wherein the R* group is $C(OH)(CH_2COOH)_2$.

Example 6

Remazol Black B dye has the following structure:

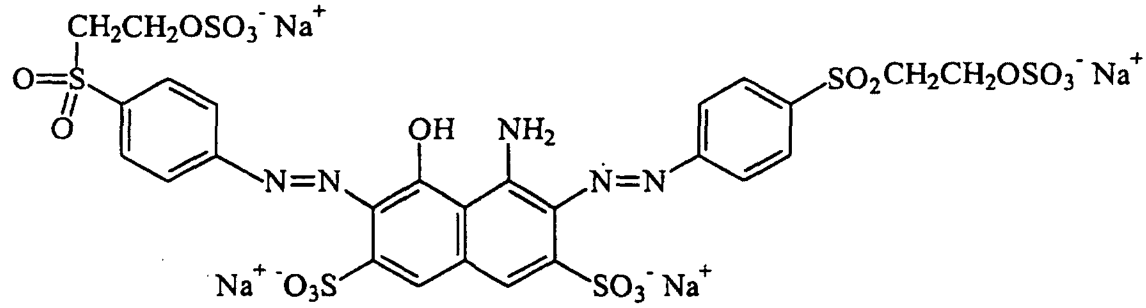

0.005 moles of this dye is heated in a bath at 60°C at pH10-10.5 for 20 minutes. CE analysis shows complete conversion to the bis-vinylsulphone form. The bis-vinylsulphone dye is added to a stirred solution of lactic acid (0.005 moles) at pH 3.5 at 40°C. This addition is complete in about 1 hour and the mixture if left stirring for a further 3 hours. The final product contains the compound:

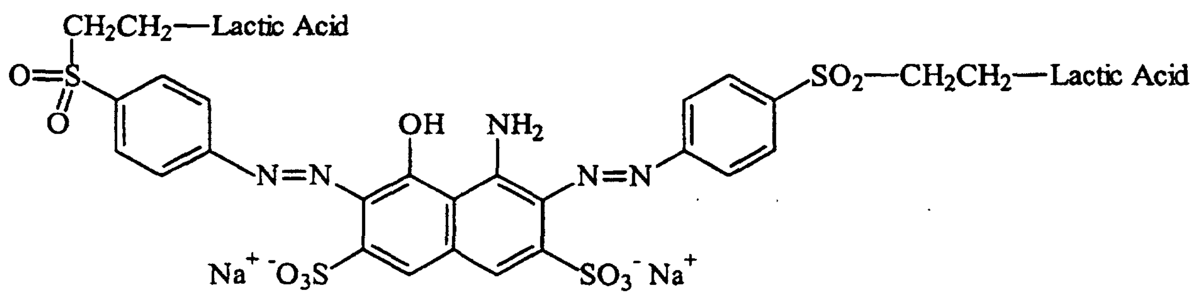

In the reaction mechanism above Lactic Acid denotes the -O(C=O)R* group in formula (I) above derived from lactic acid.

Example 7

Dye I (sulphatoethylsulphone dye) has the structure below

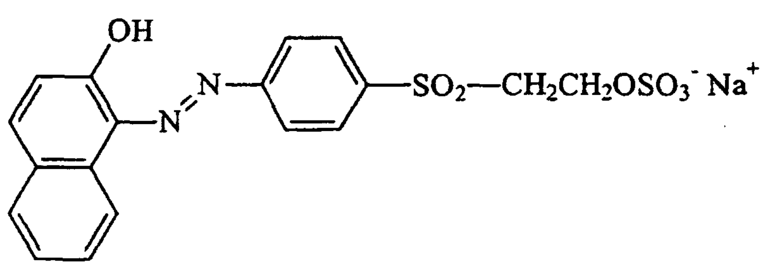

Dye I

Synthesis of Dye I is carried out as follows. p-aminobenzene-β-sulphatoethylsulphone (PABSES) (0.018M, 5.06g) is stirred in water (300ml) and acidified to pH 1.3 by the addition of 35% HCl (2.4ml). The solution is cooled to

0-5°C and 0.5M aqueous sodium nitrite (37ml) is gradually added over 20 minutes. After stirring for a further 10 minutes, any excess nitrous acid remaining is destroyed by the addition of 10% w/w aqueous sulphamic acid to yield the diazo component. The diazo component is added to a solution of β-naphthol (0.018M, 2.59g) in 0.2M aqueous sodium hydroxide (50ml) at 0-5°C. The pH of the solution is adjusted to 7.0 via the addition of 0.1M aqueous HCl and stirred at 0-5°C for 1 hour. After 1 hour, the temperature of the solution is allowed to reach ambient and potassium thiocyanate (50g) is added. The mixture is stirred for a further 30 minutes, after which time the precipitated dye is collected by filtration, washed thoroughly with acetone to remove KSCN and dried in a dessicator.

Dye II (citrate dye)

Dye II is prepared as follows:
Citric acid (0.004M, 0.8g) is dissolved in water (50ml), adjusted to pH 3-3.5 via the addition of solid sodium carbonate and then gradually added dropwise, 1 drop per 15 sec, to a solution of Dye I (0.004M, 2.0g) in water (150ml) at 40°C. The pH of the dye solution is maintained between 3.5-4.0 during the addition of the aqueous citric acid via the addition of solid sodium carbonate, the pH of the dye solution being maintained after the addition of the acid until an increase in pH is detected. At this point, the dye solution is acidified with concentrated HCl to pH 2 and cooled to room temperature. The dye (Dye II) precipitates from solution and is collected by filtration, washed thoroughly with acetone and finally dried in a vacuum dessicator. The dye is stored in a fridge at 0-5°C.

Dye II has the following structure:

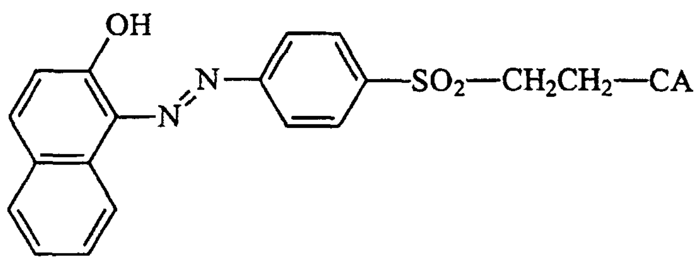

Dye II

In the reaction mechanism above CA denotes the -O(C=O)R* group in formula (I) above derived from citric acid, i.e. $-C(OH)(CH_2COOH)_2$ or $-CH_2C(OH)(COOH)CH_2COOH$. It should be noted that the citric acid moiety is bonded to the heterocycle via one of its carboxylic groups. It will be understood by those skilled in the art that in the case of unsymmetrical compounds having more than one carboxylic acid group, for example, citric acid and malic acid, that a mixture of dye compounds can be obtained due to there being different carboxylic acid reactive groups in the molecule which can attach to the vinyl sulphone group. However it is believed that in the case of citric acid that the citric acid reacts primarily via its carboxylic acid group to give a compound wherein the R* group is $C(OH)(CH_2COOH)_2$.

The FT-IR spectra of Dye I and Dye II can be obtained on a Perkin-Elmer 1740 FT-IR spectrophotometer, the spectra being obtained using the KBr disc technique which is well known to those skilled in the art. The spectra obtained are presented in Figures I and II, whilst some of the more significant peaks present in the spectra are listed in Table I below.

Table I:

| Characteristic absorption peaks present in the FT-IR spectra of Dye I and Dye II | | |
|---|---|---|
| Dye | Wavenumber $cm^{-1}$ | Functional group |
| Dye I | 1005 | $-SO_3^-$ |
| | 1051 | $-OSO_3^-$ |
| | 1067 | $-SO_3$ |
| | 1135 | $-SO_2-$ |
| | 1234 | $-OSO_3^-$ |
| | 3456 | -OH |

Table I: (continued)

| Characteristic absorption peaks present in the FT-IR spectra of Dye I and Dye II | | |
|---|---|---|
| Dye | Wavenumber $cm^{-1}$ | Functional group |
| Dye II | 980<br>1136<br>1384<br>1725<br>3436 | $-CH=CH_2$<br>$-SO_2-$<br>$-CH=CH_2$<br>-CO- (ester)<br>-OH |

The compounds prepared according to Examples 1 to 7 and at standard depths all have high Exhaustion Values, high Fixation Values, particularly on cellulosic substrates such as cotton, and show significant improvements in terms of reducing spent dyestuff in effluent, increasing dye affinity to the substrate, increasing the dye-substrate covalent bonding, increasing the ability to dye substrates at room temperature, decreasing the amount of dye that is removed during the post dyeing "soaping off process" and therefore simplifying the post dyeing "soaping off process" traditionally associated with dyeing cotton with fibre reactive dyes and reduction of staining of adjacent white fabrics. In addition, the compounds prepared above provide more intense dyeings and require less levels of salt for dyeing cotton substrates. These advantages can be demonstrated by the following Examples 8 and 9.

Example 8

All dye compounds prepared according to Examples 1 to 7 can be used to dye cotton using the dyeing procedures detailed below. After the cotton dyeing procedure has been carried out a soaping-off process can also be carried out on the cotton fibre.

Cotton dyeing procedure

An aqueous dye solution is prepared containing a dye compound according to any of Examples 1 to 7. The dye solution contains 1% on mass of fibre of dye, 80g/L $Na_2SO_4$ and 5% on mass of fibre of sodium acetate. The cotton fabrics are soaked in water and then the cotton fabrics are dyed in the above dye-bath at pH 7 at 50°C for 45 minutes. The dyed cotton fabric is then fixed in the dye-bath at pH 11.5 with addition of 30g/L of trisodium phosphate and dyeing continued at 50°C for 60 minutes. The dyed fabric is rinsed with water.

In the above dyeing procedure the dye bath for each dye compound is almost totally exhausted (i.e. only slight colour in the dye bath after dyeing), indicating that the compounds prepared according to Examples 1 to 7 each have a high Exhaustion Value (>95%). The Exhaustion Values for each product can be obtained by comparing the photo-absorption. of the dyebath liquid before and after dyeing. The Exhaustion Values for Examples 1 to 3 are given in Table A below.

Soaping-off process

A soaping off process can then be carried out by washing the dyed fabrics with an aqueous solution of Sandozine NIE (2g/L) (available from Clariant (Switzerland) Ltd., R&D Dyestuffs, Post Box, Building 88/1007, CH-4002 Basel) at 100°C for 30 minutes.

In the above soaping-off process hardly any colour was removed from the fabric, resulting in an almost colourless soaping liquid, indicating that the compounds prepared according to Examples 1 to 7 each have a high degree of dye -fibre covalent bonding and a high Fixation Value (>95%). The Fixation Values of the dye products prepared according to Examples 1 to 3 are shown in Table A below.

Table A -

| Exhaustion and Fixation Values for Example 1 to 3 | | | | | |
|---|---|---|---|---|---|
| Eg. | Dye Name | Colour of Powder Dye Product | Exhaustio n Value (E%) | Fixation Value (F%) | Efficiency Value (T) |
| 1 | RBBRS/C A | Deep Blue | 99.71% | 97.36% | 97.08 |
| 2 | RBBRS/TA | Deep Blue | 99.14% | 95.44% | 94.62 |

Table A - (continued)

| Exhaustion and Fixation Values for Example 1 to 3 | | | | | |
|---|---|---|---|---|---|
| Eg. | Dye Name | Colour of Powder Dye Product | Exhaustio n Value (E%) | Fixation Value (F%) | Efficiency Value (T) |
| 3 | RBBRS/LA | Deep Blue | 98.35% | 96.93% | 98.58 |

The E, F and T values of the dyes according to the present invention are typically higher than many of the commercially available starting materials. In particular, the F and T values of the dyes according to the present invention are significantly higher than those of the commercially available starting materials.

Co3 (International Standards Organisation) Wash Fastness Test

The dyed fabrics are washed with an aqueous solution containing ECE Reference Detergent (5g/ml) and sodium carbonate (2g/ml) at 60°C for 30 minutes.

In the above wash fastness test, no noticeable colour was removed from the cotton fibre and no staining of the white adjacent fibres occurred (using Multiple Fibre adjacent strip supplied by the Society of Dyes and Colourists, Bradford, UK).

Example 9

All dye compounds prepared according to Examples 1 to 7 can be used to dye nylon or wool using the dyeing procedures detailed below. After the nylon/wool dyeing procedure has been carried out a wash-test procedure can be carried out on the dyed fabric to test the wash-fastness of the dye compounds.

Wool/Nylon Dyeing Procedure

The wool/nylon fabric is soaked in a 2% w/w Alcopol-O (40% w/w sodium-d-isooctylsulpho- succinate commercially available from Allied Colloids) solution. The fabric is then dyed for 1 hour at 100°C and pH 3.5 in a dye-bath containing the following compositions: 1.2% on mass of fibre of dye prepared according to any of Examples 1 to 7, 5% on mass of fibre of sodium acetate, 1% Albegal B (commercially available from Ciba). The dyed wool/nylon fabric was then rinsed with water.

In the above procedure intense dyeings are provided for each of the compounds prepared according to Examples 1 to 7.

Co2 (ISO) Wash Fastness Test Procedure for Wool/Nylon Fabrics

The dyed wool/nylon fabric is washed in an aqueous solution containing 5g/L of ECE Reference Detergent (commercially available from the Society of Dyers and Colourists, Bradford, UK) at 50°C for 45 minutes.

In the above wash fastness test, no noticeable colour was removed from the wool fibre and no staining of the white adjacent fibres occurred ((using Multiple Fibre adjacent strip supplied by SDC Bradford).

## Claims

**1.** A reactive dye compound comprising:

(a) at least one chromophore moiety
(b) at least one $SO_2C_2H_4$ group which is attached to the chromophore moiety either directly via the sulphur atom of the $SO_2C_2H_4$ group or via a linking group L;

wherein at least one $SO_2C_2H_4$ group is substituted on its terminal carbon atom with at least one Y group wherein Y is -A(CO)R* wherein A is selected from O or S,
**characterized in that** R* is selected from $(CH_2)_nSH$, $(CH_2)_nNH_2$, $CH(CH_3)OH$, $CH(CH_3)O(CO)CH(CH_3)OH$ (i.e. a polyester of lactic acid), polyesters of citric acid, $CH(OH)(CH_2COOH)_2$, $CH_2(OH)(CO_2H)CH_2COOH$, C(OH)(H) $CH_2COOH$, $CH_2C(H)(OH)COOH$, C(OH)(H)C(OH)(H)COOH, $(CH_2)nNHR^1$, $CH_2NR^1R^2$, $CH_2NHNH_2$, $CH_2NHOH$, $CH_2SMe$, $CHNH_2(CH_2)_n(COOH)$, $CHNH_2CH_2SMe$, $CHNH_2CH_2SSCH_2CHNH_2COOH$, $CHNH_2CH_2SO_3H$,

$C_6H_4OH$, $C_6H_4COOH$, $C_6H_4NH_2$, $C_6H_4N$, $(CH_2)_nC_6H_4N$, $CH(R\#)NH_2$, $(CH_2)_n$-$SSO_3^-$, $(CH_2)_n$-S-S-$(CH_2)_n$, peptides or polypeptides,
wherein R1 and R2 are independently selected from C1-C4 alkyl, wherein n is an integer in the range of 1 to 4 wherein within the same molecule n is not necessarily the same integer and wherein R# corresponds to an amino acid sidechain;
and salts thereof.

**2.** A reactive dye according to Claim 1 wherein R* is selected from $(CH_2)_nSH$, $(CH2)_nNH2$, $C_6H_4N$, $CH(R\#)NH_2$, $CH(CH_3)OH$, $CH(CH_3)O(CO)CH(CH_3)OH$, $C(OH)(CH2COOH)_2$, $CH_2C(OH)(COOH)CH2COOH$, $C(H)(CH_3)OH$, $C(H)(OH)CH_2COOH$, $CH_2C(H)(OH)COOH$, $C(H)(OH)C(H)(OH)COOH$, $C_6H_4OH$, $C_6H_4NH_2$.

**3.** A reactive dye compound according to any of Claims 1 to 2 wherein R* is $C(OH)(CH_2COOH)_2$ or $CH_2C(OH)(COOH)CH_2COOH$.

**4.** A reactive dye compound according to any of Claims 1 to 3 wherein A is O.

**5.** A reactive dye compound having the formula (I):

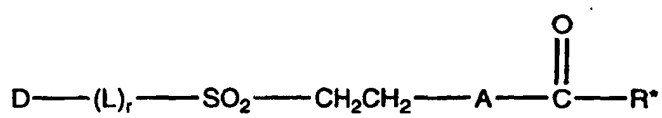

(I)

wherein:

D is a chromophore group;

r is 0 or 1;

L is a linking group selected from NH, $(CH_2)_n$, N-$(CH_2)_n$N, -$(CH_2)_n$-N, NR (R is C1-C4 alkyl),

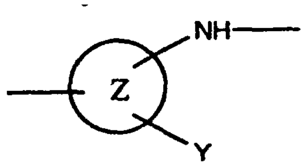 ,

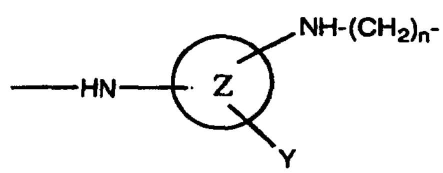

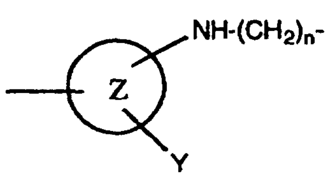 ,

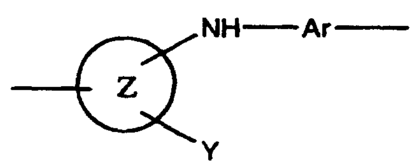 .

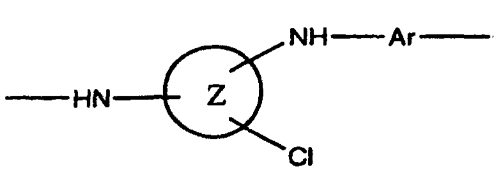 ,

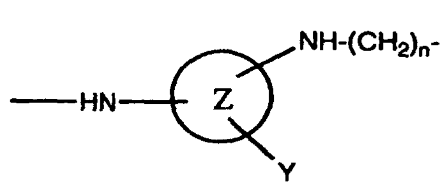 ,

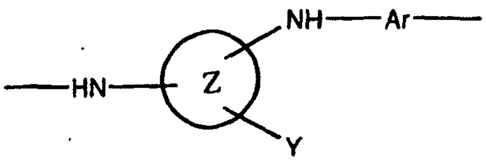 ,

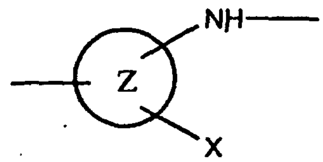 ,

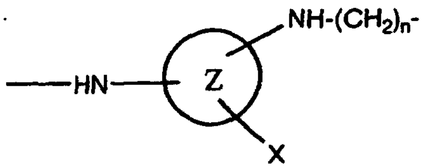 ,

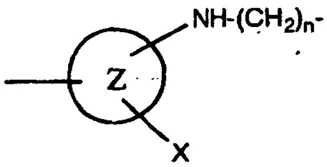 ,

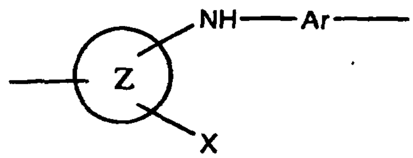 ,

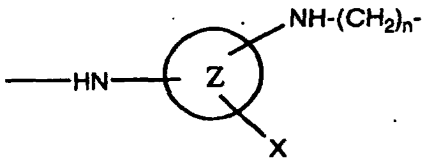 ,

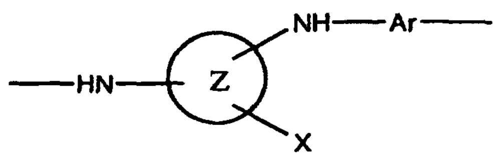

wherein Ar is an aryl group, preferably benzene, Y is halogen or O(C=O)R*, n is an integer of from 1 to 4, Z is a nitrogen-containing heterocycle, X is selected from thio-derivatives, halogen (preferably fluorine and chlorine), amines, alkoxy groups, carboxylic acid groups, CN, $N_3$, and quaternized nitrogen derivatives, Q+;
A is O or S,
R* is selected from $(CH_2)_nSH$, $(CH_2)_nNH_2$, $CH(CH_3)OH$, $CH(CH_3)O(CO)CH(CH_3)OH$ (i.e. a polyester of lactic acid), polyesters of citric acid, $CH(OH)(CH_2COOH)_2$, $CH_2(OH)(CO_2H)CH_2COOH$, $C(OH)(H)CH_2COOH$, $CH_2C(H)(OH)COOH$, $C(OH)(H)C(OH)(H)COOH$, $(CH_2)nNHR^1$, $CH_2NR^1R^2$, $CH_2NHNH_2$, $CH_2NHOH$, $CH_2SMe$, $CHNH_2(CH_2)_n(COOH)$, $CHNH_2CH_2SMe$, $CHNH_2CH_2SSCH_2CHNH_2COOH$, $CHNH_2CH_2SO_3H$, $C_6H_4OH$, $C_6H_4COOH$, $C_6H_4NH_2$, $C_6H_4N$, $(CH_2)_nC_6H_4N$, $CH(R\#)NH_2$, $(CH_2)_n$-$SSO_3^-$, $(CH_2)_n$-S-S-$(CH_2)_n$, peptides or polypeptides linked to the vinylsulphone group via its terminal carboxylic acid group, wherein $R_1$ and $R_2$ are independently selected from $C_1$-$C_4$ alkyl, wherein n is an integer in the range of 1 to 4 wherein within the same molecule n is not necessarily the same integer and wherein R# corresponds to an amino acid sidechain;
and salts thereof.

**6.** A reactive dye according to Claim 5 wherein R* is selected from $(CH_2)_nSH$, $(CH_2)_nNH_2$, $C_6H_4N$, $CH(R\#)NH_2$, $CH(CH_3)OH$, $CH(CH_3)O(CO)CH(CH_3)OH$, $C(OH)(CH_2COOH)_2$, $CH_2C(OH)(COOH)CH_2COOH$, $C(H)(CH_3)OH$, $C(H)(OH)CH_2COOH$, $CH_2C(H)(OH)COOH$, $C(H)(OH)C(H)(OH)COOH$, $C_6H_4OH$, $C_6H_4NH_2$.

**7.** A reactive dye according to Claim 5 or 6 wherein R* is $C(OH)(CH_2COOH)_2$ or $CH_2C(OH)(COOH)CH_2COOH$ or a derivative of a citric acid polymer.

**8.** A reactive dye compound according to any of Claims 5 to 7 wherein A is O.

**9.** A reactive dye compound having the structure:

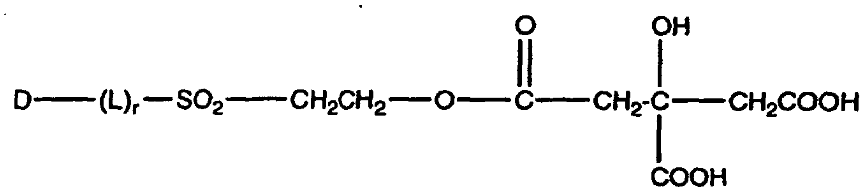

(Ia)

wherein D, L, r are as defined above.

**10.** A reactive dye compound having the structure:

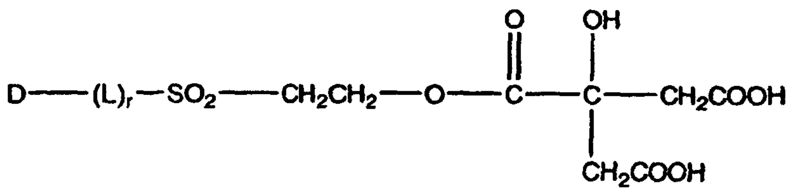

(Ib)

wherein D, L and r are as defined above.

**11.** Use of a compound according to any of Claims 1 to 10 for dyeing cellulosic substrates, preferably cotton.

**12.** Use of a compound according to any of Claims 1 to 10 for dyeing wool.

**13.** Use of a compound according to any of Claims 1 to 10 for dyeing polyamide substrates, preferably nylon.

**14.** Use of a compound according to any of Claims 1 to 10 for dyeing silk.

**15.** Use of a compound according to any of Claims 1 to 10 for dyeing keratin, preferably hair.

**16.** Use of a compound according to any of Claims 1 to 10 for dyeing leather.

**17.** Process for the preparation of a compound according to any of Claims 1 to 10 comprising the steps of reacting a first starting material (preferably one mole) with a second starting material (preferably one mole), the first starting material comprising at least one chromophore, at least one $SO_2C_2H_4$ which is attached to the chromophore group either directly via the sulphur atom of the $SO_2C_2H_4$ group or via a linking group L, the second starting material comprising an oxy- or thio-carbonyl group.

**18.** Process according to Claim 17 wherein the process is carried out at a pH of from 2 to 8, preferably from 3 to 5.

**19.** Process according to Claim 17 or 18 wherein the second starting material is added to the first starting material slowly, preferably dropwise, preferably over several hours, preferably 1-5 hours, more preferably 2-3 hours.

**20.** Product obtainable by a process according to any of Claims 17 to 19.

**21.** A dye composition comprising the compound or product of any of Claims 1 to 10 or 17 to 20.

**22.** A dye composition according to Claim 21 wherein the composition is in the form of a solid mixture and further comprises an acid buffer.

**23.** A dye composition according to Claim 21 wherein the composition is in the form of a liquid and further comprises

water and an acid buffer.

**24.** A dye composition according to Claim 21 wherein the composition is in the form of a paste and further comprises water, thickening agent and an acid buffer.

**25.** A dye composition according to Claim 21, 22, or 24 wherein the pH is preferably from 2 to 3.

**Patentansprüche**

**1.** Reaktionsfarbstoff-Verbindung, die folgendes umfasst:

(a) zumindest eine Chromophor-Komponente
(b) zumindest eine $SO_2C_2H_4$-Gruppe, die entweder direkt über das Schwefel-Atom der $SO_2C_2H_4$-Gruppe oder über eine Verbindungsgruppe L an die Chromophor-Komponente gebunden ist;

wobei zumindest eine $SO_2C_2H_4$-Gruppe an ihrem terminalen Kohlenstoffatom mit zumindest einer Y-Gruppe substituiert ist, wobei Y -A(CO)R* ist, wobei A aus O oder S ausgewählt ist,
**dadurch gekennzeichnet, dass** R* aus $(CH_2)_nSH$, $(CH_2)_nNH_2$, $CH(CH_3)OH$, $CH(CH_3)O(CO)CH(CH_3)OH$ (d.h. ein Polyester der Milchsäure), aus Polyestern von Citronensäure, $CH(OH)(CH_2COOH)_2$, $CH_2(OH)(CO_2H)CH_2COOH$, $C(OH)(H)CH_2COOH$, $CH_2C(H)(OH)COOH$, $C(OH)(H)C(OH)(H)COOH$, $(CH_2)nNHR^1$, $CH_2NR^1R^2$, $CH_2NHNH_2$, $CH_2NHOH$, $CH_2SMe$, $CHNH_2(CH_2)_n(COOH)$, $CHNH_2CH_2SMe$, $CHNH_2CH_2SSCH_2CHNH_2COOH$, $CHNH_2CH_2SO_3H$, $C_6H_4OH$, $C_6H_4COOH$, $C_6H_4NH_2$, $C_6H_4N$, $(CH_2)_nC_6H_4N$, $CH(R\#)NH_2$, $(CH_2)_n\text{-}SSO_3^-$, $(CH_2)_{n}\text{-}S\text{-}S\text{-}(CH_2)_n$, Peptiden oder Polypeptiden ausgewählt ist,
wobei R1 und R2 unabhängig aus C1 - C4 Alkyl ausgewählt sind, wobei n eine ganze Zahl im Bereich von 1 bis 4 ist, wobei innerhalb des gleichen Moleküls n nicht notwendigerweise die gleiche ganze Zahl ist und wobei R# einer Aminosäure-Seitenkette entspricht;
und Salze hiervon.

**2.** Reaktionsfarbstoff nach Anspruch 1, wobei R* aus $(CH_2)_nSH$, $(CH2)_nNH2$, $C_6H_4N$, $CH(R\#)NH_2$, $CH(CH_3)OH$, $CH(CH_3)O(CO)CH(CH_3)OH$, $C(OH)(CH2COOH)_2$, $CH_2C(OH)(COOH)CH2COOH$, $C(H)(CH_3)OH$, $C(H)(OH)CH_2COOH$, $CH_2C(H)(OH)COOH$, $C(H)(OH)C(H)(OH)COOH$, $C_6H_4OH$, $C_6H_4NH_2$ ausgewählt ist.

**3.** Reaktionsfarbstoff-Verbindung nach einem der Ansprüche 1 oder 2, wobei R* $C(OH)(CH_2COOH)_2$ oder $CH_2C(OH)(COOH)CH_2COOH$ ist.

**4.** Reaktionsfarbstoff-Verbindung nach einem der Ansprüche 1 bis 3 wobei A O ist.

**5.** Reaktionsfarbstoff-Verbindung mit der Formel (I):

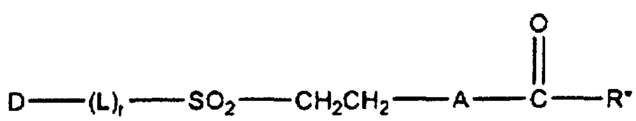

(I)

wobei:

D eine Chromophor-Gruppe ist;
r 0 oder 1 ist;
L eine Verbindungsgruppe ist, ausgewählt aus NH, $(CH_2)_n$, $N\text{-}(CH_2)_nN$, $\text{-}(CH_2)_n\text{-}N$, NR (R ist C1 - C4 Alkyl),

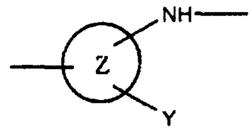
,

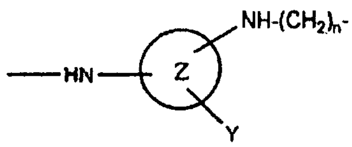
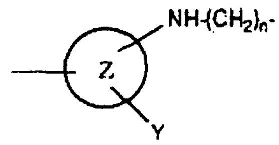

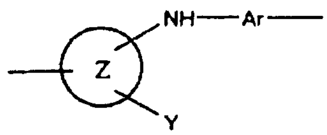
,

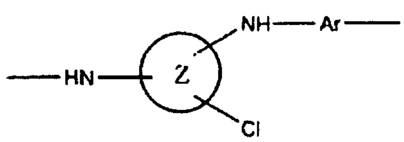
,
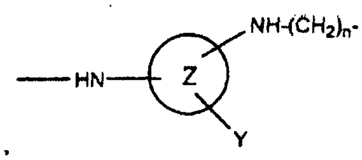

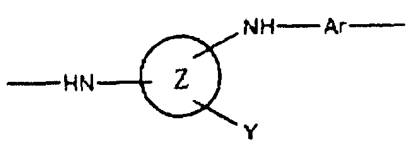
,

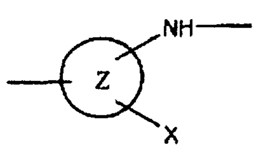
,
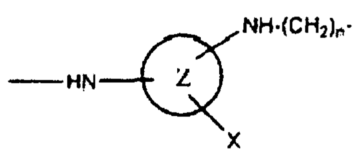
,

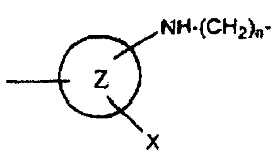
,
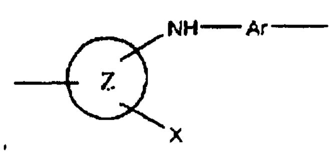
,

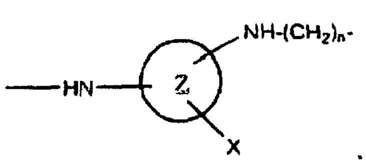
,
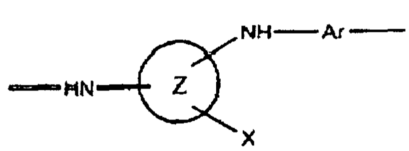

wobei Ar eine Aryl-Gruppe, vozugsweise Benzol ist, Y Halogen oder O(C=O)R* ist, n eine ganze Zahl von 1 bis 4 ist, Z ein stickstoffenthaltender Heterozyklus ist, X aus Thio-Derivaten, Halogen (vorzugsweise Fluor und Chlor), Aminen, Alkoxy-Gruppen, Carbonsäure-Gruppen, CN, $N_3$ und quarternisierten Stickstoffderivaten, Q+ ausgewählt ist;

A O oder S ist,

R* aus $(CH_2)_nSH$, $(CH_2)_nNH_2$, $CH(CH_3)OH$, $CH(CH_3)O(CO)CH(CH_3)OH$ (d.h. ein Polyester der Milchsäure), Polyestern der Citronensäure, $CH(OH)(CH_2COOH)_2$, $CH_2(OH)(CO_2H)CH_2COOH$, $C(OH)(H)CH_2COOH$, $CH_2C(H)(OH)COOH$, $C(OH)(H)C(OH)(H)COOH$, $(CH_2)nNHR^1$, $CH_2NR^1R^2$, $CH_2NHNH_2$, $CH_2NHOH$, $CH_2SMe$, $CHNH_2(CH_2)_n(COOH)$, $CHNH_2CH_2SMe$, $CHNH_2CH_2SSCH_2CHNH_2COOH$, $CHNH_2CH_2SO_3H$, $C_6H_4OH$, $C_6H_4COOH$, $C_6H_4NH_2$, $C_6H_4N$, $(CH_2)_nC_6H_4N$, $CH(R\#)NH_2$, $(CH_2)_n\text{-}SSO_3^-$, $(CH_2)_n\text{-S-S-}(CH_2)_n$, Peptiden oder Polypeptiden ausgewählt ist, die über ihre terminale Carbonsäure-Gruppe an die Vinylsulphon-Gruppe gebunden sind, wobei $R_1$ und $R_2$ unabhängig aus $C_1$ - $C_4$ Alkyl ausgewählt sind, wobei n eine ganze Zahl im Bereich von 1 bis 4 ist, wobei innerhalb des gleichen Moleküls n nicht notwendigerweise die gleiche ganze Zahl ist und wobei R# einer Aminosäure-Seitenkette entspricht;

und Salze hiervon.

**6.** Reaktionsfarbstoff nach Anspruch 5, wobei R* aus $(CH_2)_nSH$, $(CH_2)_nNH_2$, $C_6H_4N$, $CH(R\#)NH_2$, $CH(CH_3)OH$, $CH(CH_3)O(CO)CH(CH_3)OH$, $C(OH)(CH_2COOH)_2$, $CH_2C(OH)(COOH)CH_2COOH$, $C(H)(CH_3)OH$, $C(H)(OH)CH_2COOH$, $CH_2C(H)(OH)(COOH)$, $C(H)(OH)C(H)(OH)COOH$, $C_6H_4OH$, $C_6H_4NH_2$ ausgewählt ist.

**7.** Reaktionsfarbstoff nach Anspruch 5 oder 6, wobei R* $C(OH)(CH_2COOH)_2$ oder $CH_2C(OH)(COOH)CH_2COOH$ oder ein Derivat eines Citronensäure-Polymers ist.

**8.** Reaktionsfarbstoff-Verbindung nach Anspruch 5 bis 7, wobei A O ist.

**9.** Reaktionsfarbstoff-Verbindung mit der Struktur:

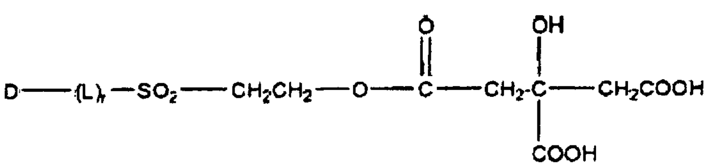

(Ia)

wobei D, L und r wie oben definiert sind.

**10.** Reaktionsfarbstoff-Verbindung mit der Struktur:

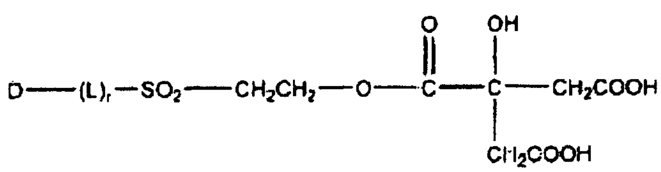

(Ib)

wobei D, L und r wie oben definiert sind.

**11.** Verwendung einer Verbindung nach einem der Ansprüche 1 - 10 zur Färbung von Cellulosesubstraten, vorzugsweise Baumwolle.

**12.** Verwendung einer Verbindung gemäß einem der Ansprüche 1 - 10 zum Färben von Wolle.

**13.** Verwendung einer Verbindung nach einem der Ansprüche 1 - 10 zum Färben von Polyamid-Substraten, vorzugsweise Nylon.

**14.** Verwendung einer Verbindung nach einem der Ansprüche 1 - 10 zum Färben von Seide.

**15.** Verwendung einer Verbindung nach einem der Ansprüche 1 - 10 zum Färben von Keratin, vorzugsweise Haar.

**16.** Verwendung einer Verbindung nach einem der Ansprüche 1 - 10 zum Färben von Leder.

**17.** Verfahren zum Herstellen einer Verbindung gemäß einem der Ansprüche 1 - 10, das die Schritte umfasst, ein erstes Ausgangsmaterial (vorzugsweise 1 Mol) mit einem zweiten Ausgangsmaterial (vorzugsweise 1 Mol) umzusetzen, wobei das erste Ausgangsmaterial zumindest ein Chromophor, zumindest ein $SO_2C_2H_4$ umfasst, das an die Chromophor-Gruppe entweder direkt über das Schwefelatom an der $SO_2C_2H_4$-Gruppe oder über eine Verbindungsgruppe L gebunden ist, wobei das zweite Ausgangsmaterial eine Oxy- oder Thio-Carbonylgruppe umfasst.

**18.** Verfahren nach Anspruch 17, wobei das Verfahren bei einem pH von 2 bis 8, vorzugsweise 3 bis 5 durchgeführt wird.

**19.** Verfahren nach Anspruch 17 oder 18, wobei das zweite Ausgangsmaterial dem ersten Ausgangsmaterial langsam, vorzugsweise tropfenweise, vorzugsweise über mehrere Stunden hinweg, vorzugsweise 1 bis 5 Stunden, besonders bevorzugt 2 bis 3 Stunden hinweg zugesetzt wird.

**20.** Produkt, das durch ein Verfahren nach einem der Ansprüche 17 bis 19 gewinnbar ist.

**21.** Farbstoff-Zusammensetzung, die die Verbindung oder das Produkt nach einem der Ansprüche 1 - 10 oder 17 - 20 umfasst.

**22.** Farbstoff-Zusammensetzung nach Anspruch 21, wobei die Zusammensetzung in Form eines festen Gemisches vorliegt und weiterhin einen Säurepuffer umfasst.

**23.** Farbstoff-Zusammensetzung nach Anspruch 21, wobei die Zusammensetzung in Form einer Flüssigkeit vorliegt und weiterhin Wasser und einen Säurepuffer umfasst.

**24.** Farbstoff-Zusammensetzung nach Anspruch 21, wobei die Zusammensetzung in Form einer Paste vorliegt und weiterhin Wasser, ein Verdickungsmittel und einen Säurepuffer umfasst.

**25.** Farbstoff-Zusammensetzung nach Anspruch 21, 22 oder 24, wobei der pH vorzugsweise von 2 bis 3 beträgt.

## Revendications

**1.** Composé colorant réactif comprenant :

(a) au moins un fragment chromophore
(b) au moins un groupe $SO_2C_2H_4$ qui est fixé au fragment chromophore, soit directement par l'intermédiaire de l'atome de soufre du groupe $SO_2C_2H_4$, soit par l'intermédiaire d'un groupe de liaison L ;

dans lequel au moins un groupe $SO_2C_2H_4$ est substitué sur son atome de carbone terminal par au moins un groupe Y dans lequel Y est -A(CO)R*, dans lequel A est choisi parmi O ou S,

**caractérisé en ce que** R* est choisi parmi $(CH_2)_nSH$, $(CH_2)_nNH_2$, $CH(CH_3)OH$, $CH(CH_3)O(CO)CH(CH_3)OH$ (à savoir, un polyester de l'acide lactique), des polyesters de l'acide citrique, $CH(OH)(CH_2COOH)_2$, $CH_2(OH)(CO_2H)CH_2COOH$, $C(OH)(H)CH_2COOH$, $CH_2C(H)(OH)COOH$, $C(OH)(H)C(OH)(H)COOH$, $(CH_2)_nNHR^1$, $CH_2NR^1R^2$, $CH_2NHNH_2$, $CH_2NHOH$, $CH_2SMe$, $CHNH_2(CH_2)_n(COOH)$, $CHNH_2CH_2SMe$, $CHNH_2CH_2SSCH_2CHNH_2COOH$, $CHNH_2CH_2SO_3H$, $C_6H_4OH$, $C_6H_4COOH$, $C_6H_4NH_2$, $C_6H_4N$, $(CH_2)_nC_6H_4N$, $CH(R\#)NH_2$, $(CH_2)_n-SSO_3^-$, $(CH_2)_n$,-S-S-$(CH_2)_n$, des peptides ou des polypeptides,

dans lequel $R^1$ et $R^2$ sont choisis indépendamment parmi un groupe alkyle en $C_1$ à $C_4$, dans lequel n est un

entier dans la plage allant de 1 à 4, dans lequel, à l'intérieur de la même molécule, n n'est pas nécessairement le même entier et dans lequel R# correspond à une chaîne latérale d'acide aminé ;

et des sels de ceux-ci.

**2.** Colorant réactif selon la revendication 1, dans lequel R* est choisi parmi $(CH_2)_n$, SH, $(CH_2)_nNH_2$, $C_6H_4N$, CH(R#)$NH_2$, $CH(CH_3)OH$, $CH(CH_3)O(CO)CH(CH_3)OH$, $C(OH)(CH_2COOH)_2$, $CH_2C(OH)(COOH)CH_2COOH$, $C(H)(CH_3)OH$, $C(H)(OH)CH_2COOH$, $CH_2C(H)(OH)COOH$, $C(H)(OH)C(H)(OH)COOH$, $C_6H_4OH$, $C_6H_4NH_2$.

**3.** Composé colorant réactif selon l'une quelconque des revendications 1 et 2, dans lequel R* est $C(OH)(CH_2COOH)_2$ ou $CH_2C(OH)(COOH)CH_2COOH$.

**4.** Composé colorant réactif selon l'une quelconque des revendications 1 à 3, dans lequel A est O.

**5.** Composé colorant réactif de formule (I) :

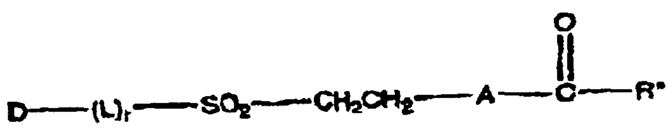

(I)

dans laquelle

D est un groupe chromophore ;

r vaut 0 ou 1 ;

L est un groupe de liaison choisi parmi NH, $(CH_2)_n$, N-$(CH_2)_n$N, -$(CH_2)_n$-N, NR (R est un groupe alkyle en $C_1$ à $C_4$),

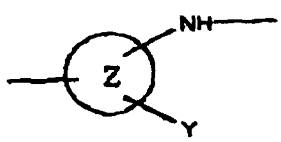

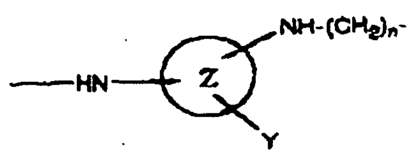

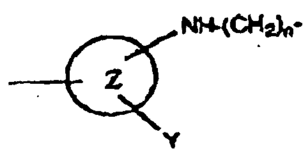

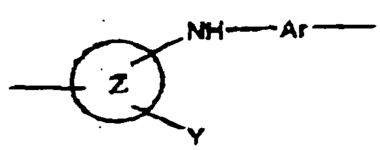

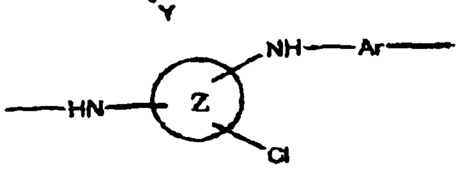

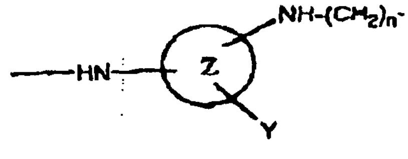

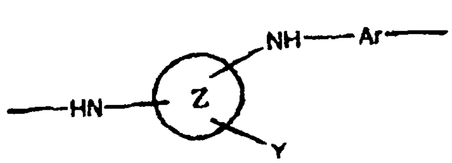

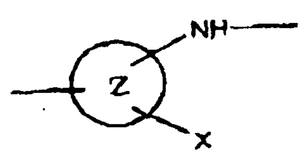

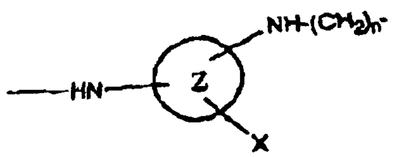

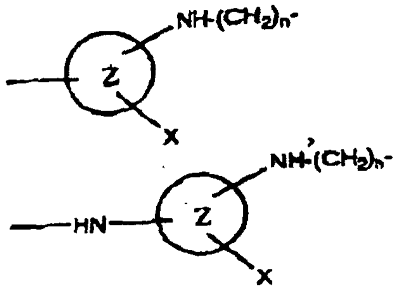

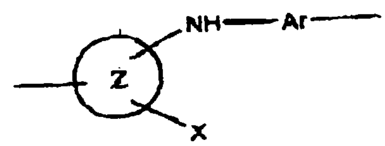

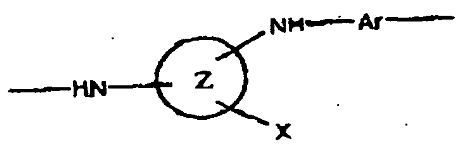

dans lesquelles Ar est un groupe aryle, de préférence un groupe benzène, Y est un halogène ou O(C=O) R*, n est un entier allant de 1 à 4, Z est un hétérocycle azoté, X est choisi parmi des dérivés thio, un halogène (de préférence, le fluor et le chlore), des amines, des groupes alcoxy, des groupes acide carboxylique, CN, $N_3$ et des dérivés d'azote quaternaire, Q+;

A est O ou S,

R* est choisi parmi $(CH_2)_nSH$, $(CH_2)_nNH_2$, $CH(CH_3)OH$, $CH(CH_3)O(CO)CH(CH_3)OH$ (à savoir un polyester de l'acide lactique), des polyesters de l'acide citrique, $CH(OH)(CH_2COOH)_2$, $CH_2(OH)(CO_2H)CH_2COOH$, $C(OH)(H)CH_2COOH$, $CH_2C(H)(OH)COOH$, $C(OH)(H)C(OH)(H)COOH$, $(CH_2)_nNHR^1$, $CH_2NR^1R^2$, $CH_2NHNH_2$, $CH_2NHOH$, $CH_2SMe$, $CHNH_2(CH_2)_n(COOH)$, $CHNH_2CH_2SMe$, $CHNH_2CH_2SSCH_2CHNH_2COOH$, $CHNH_2CH_2SO_3H$, $C_6H_4OH$, $C_6H_4COOH$, $C_6H_4NH_2$, $C_6H_4N$, $(CH_2)_nC_6H_4N$, $CH(R\#)NH_2$, $(CH_2)_n\text{-}SSO_3^-$, $(CH_2)_n\text{-}S\text{-}S\text{-}(CH_2)_n$, des peptides ou des polypeptides reliés au groupe vinylsulfone par l'intermédiaire de son groupe acide carboxylique terminal, où $R^1$ et $R^2$ sont choisis indépendamment parmi un groupe alkyle en $C_1$ à $C_4$, où n est un entier dans la plage allant de 1 à 4, où, à l'intérieur de la même molécule, n n'est pas nécessairement le même entier et où R# correspond à une chaîne latérale d'acide aminé ;

et des sels de ceux-ci.

**6.** Colorant réactif selon la revendication 5, dans lequel R* est choisi parmi $(CH_2)_nSH$, $(CH_2)_nNH_2$, $C_6H_4N$, $CH(R\#)NH_2$, $CH(CH_3)OH$, $CH(CH_3)O(CO)CH(CH_3)OH$, $C(OH)(CH_2COOH)_2$, $CH_2C(OH)(COOH)CH_2COOH$, $C(H)(CH_3)OH$, $C(H)(OH)CH_2COOH$, $CH_2C(H)(OH)COOH$, $C(H)(OH)C(H)(OH)COOH$, $C_6H_4OH$, $C_6H_4NH_2$.

**7.** Colorant réactif selon la revendication 5 ou 6, dans lequel R* est $C(OH)(CH_2COOH)_2$ ou $CH_2C(OH)(COOH)CH_2COOH$ ou un dérivé d'un polymère d'acide citrique.

**8.** Composé colorant réactif selon l'une quelconque des revendications 5 à 7, dans lequel A est O.

**9.** Composé colorant réactif de structure :

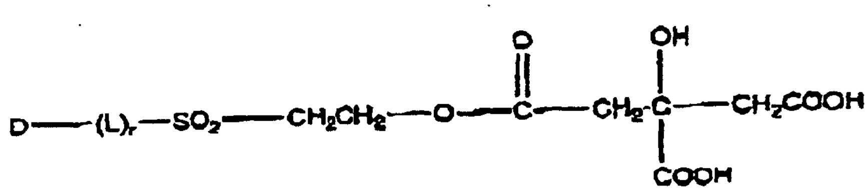

(Ia)

dans laquelle D, L et r sont tels que définis ci-dessus.

**10.** Composé colorant réactif de structure :

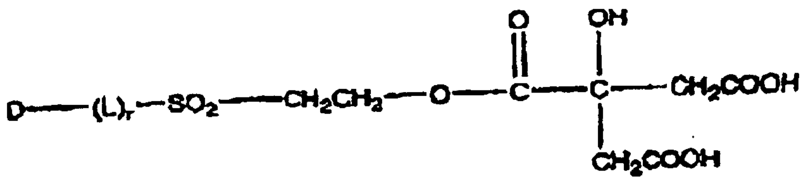

(Ib)

dans laquelle D, L et r sont tels que définis ci-dessus.

**11.** Utilisation d'un composé selon l'une quelconque des revendications 1 à 10 pour teindre des substrats cellulosiques, de préférence le coton.

**12.** Utilisation d'un composé selon l'une quelconque des revendications 1 à 10 pour teindre la laine.

**13.** Utilisation d'un composé selon l'une quelconque des revendications 1 à 10 pour teindre des substrats polyamides, de préférence le nylon.

**14.** Utilisation d'un composé selon l'une quelconque des revendications 1 à 10 pour teindre la soie.

**15.** Utilisation d'un composé selon l'une quelconque des revendications 1 à 10 pour teindre la kératine, de préférence les cheveux.

**16.** Utilisation d'un composé selon l'une quelconque des revendications 1 à 10 pour teindre le cuir.

**17.** Procédé pour la préparation d'un composé selon l'une quelconque des revendications 1 à 10, comprenant les étapes consistant à faire réagir une première matière de départ (de préférence une mole) avec une seconde matière de départ (de préférence une mole), la première matière de départ comprenant au moins un groupe chromophore, au moins un groupe $SO_2C_2H_4$ qui est fixé au groupe chromophore soit directement par l'intermédiaire de l'atome de soufre du groupe $SO_2C_2H_4$, soit par l'intermédiaire d'un groupe de liaison L, la seconde matière de départ comprenant un groupe oxycarbonyle ou thiocarbonyle.

**18.** Procédé selon la revendication 17, dans lequel le procédé est réalisé à un pH allant de 2 à 8, de préférence de 3 à 5.

**19.** Procédé selon la revendication 17 ou 18, dans lequel la seconde matière de départ est ajoutée lentement à la première matière de départ, de préférence goutte à goutte, de préférence sur plusieurs heures, de préférence 1 à 5 heures, de manière davantage préférée, 2 à 3 heures.

**20.** Produit pouvant être obtenu par un procédé selon l'une quelconque des revendications 17 à 19.

**21.** Composition colorante comprenant le composé ou produit selon l'une quelconque des revendications 1 à 10 ou 17 à 20.

**22.** Composition colorante selon la revendication 21, dans laquelle la composition se trouve sous la forme d'un mélange solide et comprend en outre un tampon acide.

**23.** Composition colorante selon la revendication 21, dans laquelle la composition se trouve sous la forme d'un liquide et comprend en outre de l'eau et un tampon acide.

**24.** Composition colorante selon la revendication 21, dans laquelle la composition se trouve sous la forme d'une pâte et comprend en outre de l'eau, un épaississant et un tampon acide.

**25.** Composition colorante selon la revendication 21, 22 ou 24, dans laquelle le pH est de préférence de 2 à 3.